(19) Europäisches Patentamt
European Patent Office
Office européen des brevets

(11) EP 3 490 049 A1

(12) **EUROPEAN PATENT APPLICATION**
published in accordance with Art. 153(4) EPC

(43) Date of publication:
**29.05.2019 Bulletin 2019/22**

(21) Application number: **17843600.2**

(22) Date of filing: **22.08.2017**

(51) Int Cl.:
***H01M 10/0525*** *(2010.01)* ***H01M 4/131*** *(2010.01)*
***H01M 4/485*** *(2010.01)* ***H01M 4/505*** *(2010.01)*
***H01M 4/525*** *(2010.01)* ***H01M 4/62*** *(2006.01)*

(86) International application number:
**PCT/JP2017/029995**

(87) International publication number:
**WO 2018/038122 (01.03.2018 Gazette 2018/09)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **22.08.2016 JP 2016162024**

(71) Applicant: **Hitachi Chemical Company, Ltd.**
**Chiyoda-ku**
**Tokyo 100-6606 (JP)**

(72) Inventors:
- **GOGYO, Yuma**
  **Tokyo 100-6606 (JP)**
- **FUKUTA, Ryuichiro**
  **Tokyo 100-6606 (JP)**
- **KOJIMA, Katsunori**
  **Tokyo 100-6606 (JP)**

(74) Representative: **Hoffmann Eitle**
**Patent- und Rechtsanwälte PartmbB**
**Arabellastraße 30**
**81925 München (DE)**

(54) **LITHIUM ION SECONDARY BATTERY**

(57) A lithium-ion secondary battery contains:
a positive electrode that contains a positive electrode active material including a lithium nickel manganese complex oxide having a spinel structure, and contains an electroconductive agent including a non-crystalline carbon and graphite; and
a negative electrode that contains a negative electrode active material in which lithium ions are inserted and eliminated at an electric potential of 1.2 V or more with respect to an electric potential of lithium.



Printed by Jouve, 75001 PARIS (FR)

## Description

### Technical Field

The present invention relates to a lithium-ion secondary battery.

### Background Art

A lithium-ion secondary battery is a secondary battery having a high volumetric energy density, and is used as a power source for a portable device, such as a notebook computer, and a cell phone, utilizing such characteristics. In recent years, since a lithium-ion secondary battery has drawn attention for use as a power source for an electronic device, a power source for power storage, a power source for an electric car or the like for which downsizing is advancing, a lithium-ion secondary battery having a further high energy density has been required.

As means of improving the energy density of a lithium-ion secondary battery, for example, a method using a positive electrode active material including a lithium nickel manganese complex oxide having a spinel structure which shows a high operating electric potential is available. As an ordinary positive electrode active material lacks electron conductivity, an electroconductive agent is added together with a positive electrode active material. From the viewpoint of enhancing electron conductivity, an electroconductive agent including a non-crystalline carbon is usually used. However, since a non-crystalline carbon has a large specific surface area, the area of contact between the non-crystalline carbon and an electrolyte solution becomes large. For such a reason, the electrolyte solution is oxidized and decomposed at a high operating electric potential in an area of contact between the non-crystalline carbon and the electrolyte solution, which causes generation of a decomposition gas. This is problematic. Further, many functional groups are present on a surface of the non-crystalline carbon and these functional groups promote oxidation and decomposition of the electrolyte solution, which also causes generation of a decomposition gas.

As a technique using a positive electrode showing a high operating electric potential, for example, Patent Document 1 discloses a lithium-ion secondary battery in which a positive electrode contains a non-crystalline carbon and graphite. Patent Document 1 teaches that cycle performance of such a lithium-ion secondary battery can be improved even at a high operating electric potential.

### Related Art Document

### Patent Document

Patent Document 1: Japanese Patent Application Laid-Open (JP-A) No. 2014-116217

## SUMMARY OF INVENTION

### Technical Problem

Meanwhile, it has been found that since graphite is used in a negative electrode of the lithium-ion secondary battery disclosed in Patent Document 1, and the electric potential of the negative electrode containing graphite is as low as about 0 V, reductive decomposition of an electrolyte solution is induced at the negative electrode, which might cause generation of a decomposition gas.

The present invention has been made in consideration of the above-mentioned circumstances. An object of the present invention is to provide a lithium-ion secondary battery capable of suppressing the amount of a decomposition gas generated even with the use of a positive electrode active material showing a high operating electric potential.

A specific means for solving the above-described problems includes the following embodiments.

<1> A lithium-ion secondary battery, comprising:

a positive electrode that contains a positive electrode active material including a lithium nickel manganese complex oxide having a spinel structure, and contains an electroconductive agent including a non-crystalline carbon and graphite; and

a negative electrode that contains a negative electrode active material in which lithium ions are inserted and eliminated at an electric potential of 1.2 V or more with respect to an electric potential of lithium.

<2> The lithium-ion secondary battery according to <1>, in which the negative electrode active material contains a lithium titanium complex oxide.

<3> The lithium-ion secondary battery according to <1> or <2>, in which the non-crystalline carbon contains acetylene black.

<4> The lithium-ion secondary battery according to any one of <1> to <3>, in which an average diameter of the non-crystalline carbon is from 10 nm to 100 nm.

<5> The lithium-ion secondary battery according to any one of claims <1> to <4>, in which the graphite has an R value of 1.0 or less, the R value representing a ratio (ID/IG) of an intensity of a maximum peak observed in a range of from 1200 $cm^{-1}$ to 1400 $cm^{-1}$ (ID) and an intensity of a maximum peak observed in a range of from 1500 $cm^{-1}$ to 1650 $cm^{-1}$ (IG) as measured by Raman spectrometry.

<6> The lithium-ion secondary battery according to any one of claims <1> to <5>, in which a ratio (B/A) of a mass(A) of the non-crystalline carbon and a mass (B) of the graphite is from 0.1 to 10.0.

<7> The lithium-ion secondary battery according to any one of claims <1> to <6>, further comprising a resin as a binder, the resin having a structural unit derived from a nitrile group-including monomer and a structural unit derived from a monomer represented by the following Formula (I):

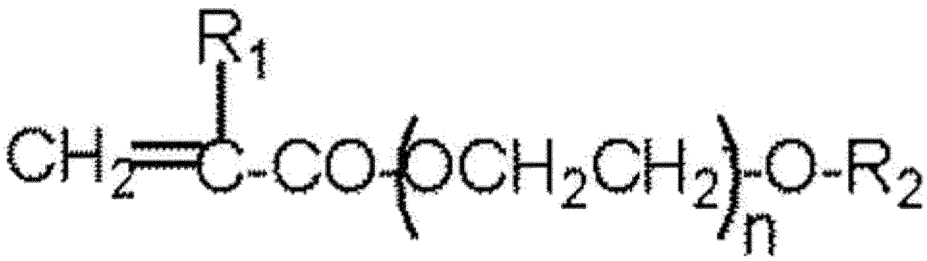

(I)

in which, in Formula (I), $R_1$ is H or $CH_3$, $R_2$ is H or a monovalent hydrocarbon group, and n is an integer from 1 to 50.

<8> The lithium-ion secondary battery according to <7>, in which the resin further has a structural unit derived from a monomer represented by the following Formula (II),

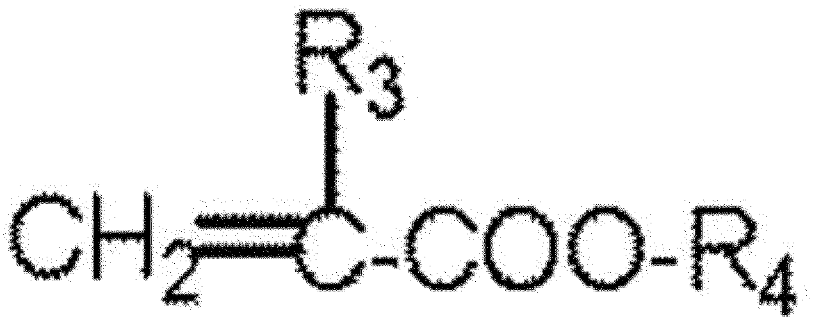

(II)

in which, in Formula (II), $R_3$ is H or $CH_3$, and $R_4$ is H or an alkyl group having from 4 to 100 carbon atoms.

According to the present invention, it is possible to provide a lithium-ion secondary battery capable of suppressing the amount of a decomposition gas generated even with the use of a positive electrode active material showing a high operating electric potential.

BRIEF DESCRIPTION OF DRAWINGS

Figure 1 is a perspective cross-sectional view illustrating one example of a lithium-ion secondary battery in the disclosures.

Figure 2 is a perspective view illustrating a positive electrode plate, a negative electrode plate and a separator forming an electrode assembly of the lithium-ion secondary battery in Figure 1.

Figure 3 is a Raman spectroscopic spectrum of graphite which was used in Example 1.

Figure 4 is a Raman spectroscopic spectrum of graphite which was used in Examples 2 to 4.

Figure 5 is a Raman spectroscopic spectrum of graphite which was used in Example 5.

Figure 6 is a Raman spectroscopic spectrum of graphite which was used in Example 6.

DESCRIPTION OF EMBODIMENTS

Hereinafter, embodiments of the present invention will be described in detail. However, the present invention is not limited to the following embodiments. In the following embodiments, the constituent elements (including the element steps and the like) are not indispensable except when particularly explicitly mentioned. The same applies to numerical values and ranges thereof, and does not limit the present invention.
In the disclosures, each numerical range specified using "(from)... to ..." represents a range including the numerical values noted before and after "to" as the minimum value and the maximum value, respectively.
In the disclosures, with respect to numerical ranges stated hierarchically herein, the upper limit or the lower limit of a numerical range of a hierarchical level may be replaced with the upper limit or the lower limit of a numerical range of another hierarchical level. Further, in the present specification, with respect to a numerical range, the upper limit or the lower limit of the numerical range may be replaced with a relevant value shown in any of Examples.
In the present disclosures, each component may include plural kinds of substances corresponding to the component. In a case in which plural kinds of substances exist corresponding to a component in the composition, the content means, unless otherwise specified, a total amount of the plural kinds of substances existing in the composition.
In the disclosures, the term "membrane" comprehends herein not only a case in which the membrane is formed over the whole observed region where the membrane is present, but also a case in which the membrane is formed only on part of the region.
In the disclosures, the term "layer" comprehends herein not only a case in which the layer is formed over the whole observed region where the layer is present, but also a case in which the layer is formed only on part of the region.
In the disclosures, the term "layered" as used herein indicates "provided on or above", in which two or more layers may be bonded or detachable.
In the disclosures, the term "solid mass" of a positive electrode material mixture or a negative electrode material mixture means a remaining component obtained by removing a volatile component such as an organic solvent from the positive electrode material mixture or the negative electrode material mixture.
A lithium-ion secondary battery in the disclosure contains:

a positive electrode that contains a positive electrode active material including a lithium nickel manganese complex oxide having a spinel structure, and an electroconductive agent including a non-crystalline carbon and graphite; and
a negative electrode that contains a negative electrode active material in which lithium ions are inserted and eliminated at an electric potential of 1.2 V or more with respect to an electric potential of lithium (hereinafter, also referred to as "specific negative electrode active material".

In the disclosure, the expression "negative electrode active material in which lithium ions are inserted and eliminated at an electric potential of 1.2 V or more with respect to an electric potential of lithium" means an "active material in which lithium ion insertion and elimination reactions are unlikely to be induced at an electric potential of less than 1.2 V with respect to an electric potential of lithium while the reactions are likely to be induced at an electric potential of 1.2 V or more with respect to an electric potential of lithium." In other words, the operating electric potential of a negative electrode needs to be substantially 1.2 V (vs. $Li/Li^+$) or more.
Since the lithium-ion secondary battery in the disclosure includes a negative electrode containing a specific negative electrode active material, the battery is substantially operated as a "battery" when the electric potential of the negative electrode reaches 1.2 V or more. Meanwhile, for example, even in a case in which the lithium-ion secondary battery is in an over-discharged state, which causes the negative electrode electric potential to be increased to reach 1.2 V or more with respect to an electric potential of lithium, the negative electrode of the lithium-ion secondary battery is not as valid for a negative electrode which is operated at an electric potential of 1.2 V or more with respect to an electric potential of lithium.
According to the lithium-ion secondary battery in the disclosure, a decomposition gas amount can be suppressed even with the use of a positive electrode active material showing a high operating electric potential. The reason for that is unclear but can be assumed as follows.
Usually, a nonaqueous solvent used for an electrolyte solution starts to be reduced and decomposed when its electric potential becomes 1.0 V or less with respect to an electric potential of lithium. When a negative electrode active material in which lithium ions are inserted and eliminated at an electric potential of 1.2 V or more with respect to an electric potential of lithium is used, its electric potential becomes higher than 1.0 V at which a nonaqueous solvent starts to be reduced, thereby making it possible to suppress reductive decomposition of an electrolyte solution in a negative electrode.
In addition, a positive electrode containing an electroconductive agent including a non-crystalline carbon and graphite has a specific surface area smaller than that of a positive electrode containing an electroconductive agent including a non-crystalline carbon alone, which results in suppression of oxidative decomposition of an electrolyte solution

in the positive electrode. Further, graphite with high carbon crystallinity has fewer functional groups which may cause oxidative decomposition of an electrolyte solution, on the carbon surface, thereby making it possible to suppress oxidative decomposition of the electrolyte solution.

As stated above, it is assumed that reductive decomposition of an electrolyte solution at a negative electrode and oxidative decomposition of an electrolyte solution at a positive electrode are suppressed in the lithium-ion secondary battery in the disclosure, thereby making it possible to suppress the decomposition gas amount.

<Positive Electrode>

A positive electrode (positive electrode plate) contains a positive electrode active material including a lithium nickel manganese complex oxide having a spinel structure and an electroconductive agent including a non-crystalline carbon and graphite. For example, a positive electrode may be formed such that it has a current collector and a positive electrode material mixture layer which is formed on both sides or one side of the current collector, and the positive electrode material mixture layer contains a positive electrode active material including a lithium nickel manganese complex oxide having a spinel structure and an electroconductive agent including a non-crystalline carbon and graphite.

The positive electrode is, for example, prepared by mixing a positive electrode active material including a lithium nickel manganese complex oxide having a spinel structure, and a electroconductive agent including a non-crystalline carbon and graphite, if necessary adding an appropriate binder and a solvent, to form a pasty positive electrode material mixture, and coating the pasty positive electrode material mixture onto a surface of a current collector, followed by drying to form a positive electrode material mixture layer.

(Positive Electrode Active Material)

A positive electrode active material includes a lithium nickel manganese complex oxide having a spinel structure. From the viewpoint of improvement energy density, a content of the lithium nickel manganese complex oxide having a spinel structure is preferably 50% by mass or more, more preferably 60% by mass or more, and still more preferably 70% by mass or more, further more preferably 85% by mass or more, extremely preferably 90% by mass or more, and peculiarly preferably 95% by mass or more, with respect to a total amount of a positive electrode active material. A content of a lithium nickel manganese complex oxide having a spinel structure is preferably from 50% by mass to100% by mass, more preferably from 60% by mass 100% by mass, and still more preferably from 70% by mass to 100% by mass, and further more preferably from 85% by mass to100% by mass, with respect to a total amount of a positive electrode active material.

The lithium nickel manganese complex oxide having a spinel structure is preferably a compound represented by $LiNi_XMn_{2-X}O_4$ ($0.3<X<0.7$), more preferably a compound represented by $LiNi_XMn_{2-X}O_4$ ($0.4<X<0.6$), and from the viewpoint of stability, still more preferably $LiNi_{0.5}Mn_{1.5}O_4$.

For further stabilizing a crystal structure of the lithium nickel manganese complex oxide having a spinel structure, a lithium nickel manganese complex oxide having a spinel structure, which Mn, Ni and/or O sites are partially substituted with another element, may be used.

Further, excessive lithium may be made present in a crystal of a lithium nickel manganese complex oxide having a spinel structure. Furthermore, a lithium nickel manganese complex oxide having a spinel structure, which O site is made to have a defect, may be used.

Examples of a metal element able to replace a Mn or a Ni site of a lithium nickel manganese complex oxide having a spinel structure include Ti, V, Cr, Fe, Co, Zn, Cu, W, Mg, Al, and Ru. The Mn or a Ni site of a lithium nickel manganese complex oxide having a spinel structure may be substituted with one kind, or two or more kinds of the metal elements. Among the substitutable metal elements, use of Ti as a substitutable metal is preferable from the viewpoint of further stabilization of the crystal structure of a lithium nickel manganese complex oxide having a spinel structure.

Examples of another substitutable element for an O site of a lithium nickel manganese complex oxide having a spinel structure include F and B. The O site of a lithium nickel manganese complex oxide having a spinel structure may be substituted with one, or two or more kinds of such other elements. Among such other substitutable elements, use of F is preferable from the viewpoint of further stabilization of the crystal structure of a lithium nickel manganese complex oxide having a spinel structure.

From the viewpoint of further improving energy density, an electric potential of the lithium nickel manganese complex oxide having a spinel structure in a full charged state with respect to $Li/Li^+$ is preferably from 4.5 V to 5.1 V, and more preferably from 4.6 V to 5.0 V. The "full charged state" means a state that a SOC (state of charge) is 100%

From the viewpoint of improvement of storage characteristics, a BET specific surface area of the lithium nickel manganese complex oxide having a spinel structure is preferably less than 2.9 $m^2/g$, more preferably less than 2.8 $m^2/g$, still more preferably less than 1.5 $m^2/g$, and further more preferably less than 1.0 $m^2/g$. From the viewpoint of improvement of input-output performance, the BET specific surface area of a lithium nickel manganese complex oxide having a spinel

structure is preferably 0.05 $m^2/g$ or more, more preferably 0.08 $m^2/g$ or more, and still more preferably 0.1 $m^2/g$ or more.

The BET specific surface area of the lithium nickel manganese complex oxide having a spinel structure is preferably from 0.05 $m^2/g$ to less than 2.9 $m^2/g$, more preferably from 0.05 $m^2/g$ to less than 2.8 $m^2/g$, still more preferably from 0.08 $m^2/g$ to less than 1.5 $m^2/g$, and further more preferably from 0.1 $m^2/g$ to less than 1.0 $m^2/g$.

The BET specific surface area may be measured, for example, according to a nitrogen adsorption capacity according to JIS Z 8830:2013. Examples for a measuring apparatus include an AUTOSORB-1 (trade name) manufactured by Quantachrome Instruments. In measuring the BET specific surface area, moisture adsorbed on a surface of a sample or in the structure thereof may conceivably influence a gas adsorption capacity, and therefore a pretreatment for removing moisture by heating is preferably conducted firstly. In the pretreatment, a measurement cell loaded with 0.05 g of a measurement sample is evacuated by a vacuum pump to be 10 Pa or less, then heated at 110°C for a duration of 3 hours or longer, and cooled naturally to normal temperature (25°C) while maintaining the reduced pressure. After the pretreatment, the measurement temperature is lowered to 77K and a measurement is conducted in a measurement pressure range of less than 1 in terms of relative pressure which is namely an equilibrium pressure with respect to a saturated vapor pressure.

From the viewpoint of a particle dispersibility, an average diameter D50 of a particle of a lithium nickel manganese complex oxide having a spinel structure (in a case in which primary particles aggregate to form a secondary particle, the average diameter D50 means the secondary particle) is preferably from 0.5 $\mu$m to 100 $\mu$m, and more preferably from 1 $\mu$m to 50 $\mu$m.

In this regard, the average diameter D50 may be determined from a particle size distribution obtained by a laser diffraction scattering method. Specifically, a lithium nickel manganese complex oxide is added into pure water at 1% by mass, and dispersed ultrasonically for 15 min, and then a measurement by a laser diffraction scattering method is performed.

The positive electrode active material may include another positive electrode active material other than a lithium nickel manganese complex oxide having a spinel structure.

Examples of another positive electrode active material other than a lithium nickel manganese complex oxide having a spinel structure include $Li_xCoO_2$, $Li_xNiO_2$, $Li_xMnO_2$, $Li_xCo_yNi_{1-y}O_2$, $Li_xCo_yM^1_{1-y}O_z$ (in the formula, $M^1$ represents at least one element selected from the group consisting of Na, Mg, Sc, Y, Mn, Fe, Cu, Zn, Al, Cr, Pb, Sb, V, and B), $Li_xNi_{1-y}M^2_yO_z$ (in the formula, $M^2$ represents at least one element selected from the group consisting of Na, Mg, Sc, Y, Fe, Cu, Zn, Al, Cr, Pb, Sb, V, and B), $Li_xMn_2O_4$ and $Li_xMn_{2-y}M^3_yO_4$ (in the formula, $M^3$ represents at least one element selected from the group consisting of Na, Mg, Sc, Y, Fe, Co, Cu, Zn, Al, Cr, Pb, Sb, V, and B), in each Formula, $0 < x \leq 1.2$, $0 \leq y \leq 0.9$, and $2.0 \leq z \leq 2.3$. In this case, an x value representing a molar ratio of lithium varies depending by charge and discharge. From the viewpoint of improving a performance of the lithium-ion secondary battery, another positive electrode active material may include an olivine type lithium salt, a chalcogen compound, and manganese dioxide. Examples of the olivine type lithium salt include $LiFePO_4$. Examples of the chalcogen compound include titanium disulfide and molybdenum disulfide.

In a case in which another positive electrode active material other than a lithium nickel manganese complex oxide having a spinel structure is included as a positive electrode active material, a BET specific surface area of such another positive electrode active material is, from the viewpoint of improvement of storage characteristics, preferably less than 2.9 $m^2/g$, more preferably less than 2.8 $m^2/g$, still more preferably less than 1.5 $m^2/g$, and further more preferably less than 1.0 $m^2/g$. From the viewpoint of improvement input-output performance, the BET specific surface area is preferably 0.05 $m^2/g$ or more, more preferably 0.08 $m^2/g$ or more, and still more preferably 0.1 $m^2/g$ or more.

The BET specific surface area of such another positive electrode active material is preferably from 0.05 $m^2/g$ to less than 2.9 $m^2/g$, more preferably from 0.05 $m^2/g$ to less than 2.8 $m^2/g$, still more preferably from 0.08 $m^2/g$ to less than 1.5 $m^2/g$, and further more preferably from 0.1 $m^2/g$ to less than 1.0 $m^2/g$.

The BET specific surface area of such another positive electrode active material may be measured by a method similar to a lithium nickel manganese complex oxide having a spinel structure.

In a case in which another positive electrode active material other than a lithium nickel manganese complex oxide having a spinel structure is included as a positive electrode active material, an average diameter D50 of a particle of such another positive electrode active material (in a case in which primary particles aggregate to form a secondary particle, the average diameter D50 means the secondary particle) is, from the viewpoint of a particle dispersibility, preferably from 0.5 $\mu$m to 100 $\mu$m, and more preferably from 1 $\mu$m to 50 $\mu$m.

The average diameter D50 of such another positive electrode active material may be measured by a method similar to that for a lithium nickel manganese complex oxide having a spinel structure.

(Electroconductive agent)

An electroconductive agent (hereinafter also referred to as a "positive electroconductive agent") includes a non-crystalline carbon and graphite.

Acetylene black, furnace black, Ketjenblack or the like may be used as the non-crystalline carbon. From the viewpoint of further improving input-output performance, acetylene black is preferable.

From the viewpoint of input-output performance, an average diameter of the non-crystalline carbon is preferably from 10 nm to 100 nm, more preferably from 20 nm to 80 nm, and still more preferably from 25 nm to 60 nm.

In this regard, the average diameter is a value measured using a laser diffraction particle size distribution measuring apparatus (for example, "SALD-3000" manufactured by Shimadzu Corporation), as a median diameter.

Examples of graphite that can be used include artificial graphite, pyrolytic graphite, natural graphite, spherical graphite, flake graphite, scaly graphite, scaly flake graphite, massive graphite, vapor grown carbon fibers, carbon nanotubes, graphene, and reduced-type oxidized graphene.

From the viewpoint of suppressing a side reaction with an electrolyte solution, graphite has an R value of preferably 1.0 or less, more preferably 0.7 or less, and still more preferably 0.5 or less, which is a ratio of an intensity of a maximum peak observed in a range of from 1200 $cm^{-1}$ to 1400 $cm^{-1}$ (ID) and an intensity of a maximum peak observed in a range of from 1500 $cm^{-1}$ to 1650 $cm^{-1}$ (IG) upon measurement by Raman spectrometry (ID/IG).

Here, the maximum peak observed in a range of from 1500 $cm^{-1}$ to 1650 $cm^{-1}$ (IG) is a peak identified as corresponding to a carbon with high crystallinity, and the maximum peak observed in a range of from 1200 $cm^{-1}$ to 1400 $cm^{-1}$ (ID) is a peak identified as corresponding to a carbon with low crystallinity.

The term "peak" means that a change from the baseline exceeds a noise level, and specifically means that the change from the baseline exceeds 100% of the noise level.

Raman spectroscopy in the disclosure is conducted by irradiating a sample with laser light using a laser Raman spectrophotometer (for example, a DXR Raman microscope manufactured by Thermo Fisher Scientific Inc.). Measurement conditions are described below.

Wavelength of laser light: 7800 Å (780 nm)
Laser output: 10 mW
Spectrometer: F signal
Entrance slit width: 800 μm
Total number of scans: 2 times
Exposure time: 30 seconds
Measurement range: From 1180 $cm^{-1}$ to 1730 $cm^{-1}$
Peak research: Background removal

From the viewpoint of input-output performance, a total amount of the non-crystalline carbon and the graphite is preferably 3% by mass or more, more preferably 4% by mass or more, and still more preferably 4.5% by mass or more, with respect to a total solid amount of the positive electrode material mixture. From the viewpoint of improvement of battery capacity, a total amount of the non-crystalline carbon and the graphite is preferably 10% by mass or less, more preferably 9% by mass or less, and still more preferably 8.5% by mass or less, with respect to the total solid amount of the positive electrode material mixture.

The total amount of the non-crystalline carbon and the graphite is preferably from 3% by mass to 10% by mass, more preferably 4% by mass to 9% by mass, and still more preferably from 4.5% by mass to 8.5% by mass, with respect to the total solid amount of the positive electrode material mixture.

From the viewpoint of improving input-output performance and inhibiting an amount of decomposition gas, a ratio (B/A) of a mass (A) of the non-crystalline carbon and a mass (B) of the graphite is preferably from 0.1 to 10.0, more preferably from 0.3 to 7.0, and still more preferably from 0.5 to 5.0.

In a case in which the ratio (B/A) is 0.1 or more, there is a tendency that an area of contact with an electrolyte solution decreases, which results in suppression of the decomposition gas amount. In a case in which the ratio (B/A) is 10.0 or less, there is a tendency that input-output performance is enhanced.

(Binder and Solvent)

A binder is not particularly limited, and a material having superior solubility or dispersibility in a dispersing solvent is selected as the binder. Specific examples thereof include: a resin polymer such as polyethylene, polypropylene, poly(ethylene terephthalate), poly(methyl methacrylate), polyimide, aromatic polyamide, cellulose, or nitrocellulose; a rubber polymer such as SBR (styrene-butadiene rubber), NBR (acrylonitrile-butadiene rubber), fluorinated rubber, isoprene rubber, butadiene rubber, or ethylene-propylene rubber; a thermoplastic elastomer polymer such as a styrene-butadiene-styrene block copolymer or a hydrogenated product thereof, an EPDM (ethylene-propylene-diene terpolymer), or a styrene-isoprene-styrene block copolymer or a hydrogenated product thereof; a soft resin polymer such as syndiotactic 1,2-polybutadiene, poly(vinyl acetate), an ethylene-vinyl acetate copolymer, or a propylene-α-olefin copolymer; a fluorocarbon polymer such as poly(vinylidene fluoride) (PVdF), polytetrafluoroethylene, fluorinated poly(vinylidene

fluoride), a polytetrafluoroethylene-ethylene copolymer, or a polytetrafluoroethylene-vinylidene fluoride copolymer; a copolymer obtained by adding acrylic acid and a straight chain ether group to a polyacrylonitrile structure; and a polymer composition having ion conductivity of an alkali metal ion (especially lithium ion). The binders may be used singly, or in a combination of two or more thereof.

Among them, from the viewpoint of further improving an adherence of the positive electrode material mixture layer, the binder preferably includes at least one selected from the group consisting of poly(vinylidene-fluoride) (PVdF), and a resin having a structural unit derived from a nitrile group-including monomer, and from the viewpoint of further improving charge and discharge cycle performance, more preferably includes the resin having a structural unit derived from a nitrile group-including monomer. In a case in which the binder includes the resin having a structural unit derived from a nitrile group-including monomer, an adherence of the positive electrode material mixture layer improves and input-output performance is excellent.

From the viewpoint of improvement of flexibility and binding property, the binder preferably further includes a resin having a structural unit derived from a monomer represented by the following Formula (I) in addition to the structural unit derived from the nitrile group-including monomer.

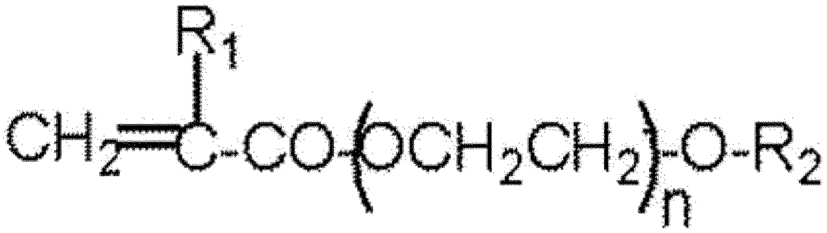

(I)

In which, in Formula (I), $R_1$ is H (hydrogen atom) or $CH_3$ (methyl group), $R_2$ is H (hydrogen) or a monovalent hydrocarbon group, and n is an integer from 1 to 50.

From the viewpoint of further improvement of flexibility and binding property, the resin as the binder may further has a structural unit derived from a monomer represented by the following Formula (II) in addition to the structural unit derived from the nitrile group-including monomer and the structural unit derived from the monomer represented by Formula (I).

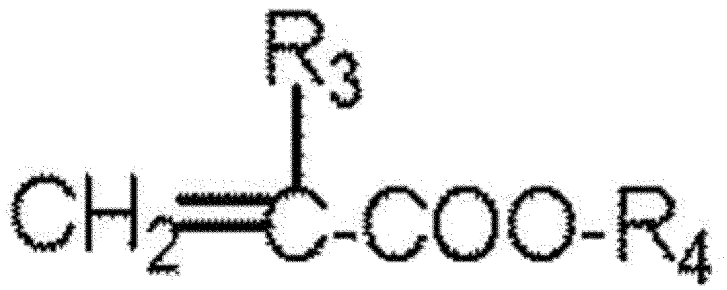

(II)

In which, in Formula (II), $R_3$ is H (hydrogen) or $CH_3$ (methyl group), $R_4$ is H (hydrogen) or an alkyl group having from 4 to 100 carbon atoms.

<Nitrile Group-containing Monomer>

There is no particular restriction on the nitrile group-containing monomer. Examples thereof include: an acrylic nitrile group-containing monomer such as acrylonitrile and methacrylonitrile; a cyanic nitrile group-containing monomer such as α-cyanoacrylate and dicyanovinylidene; and a fumaric nitrile group-containing monomer such as fumaronitrile.

Among them, acrylonitrile is preferable from the viewpoint of easiness in polymerization, cost performance, softness and flexibility of an electrode. A content of acrylonitrile is preferably from 5% by mass to 100% by mass, more preferably from 50% by mass to 100% by mass, and still more preferably from 70% by mass to 100% by mass, with respect to the total amount of nitrile group-containing monomers. The nitrile group-containing monomers may be used singly or in a combination of two or more kinds thereof.

In a case in which acrylonitrile and methacrylonitrile are used in combination as a nitrile group-containing monomer, a content of acrylonitrile is, for example, preferably from 5% by mass to 95% by mass, and more preferably from 50% by mass to 95% by mass, with respect to a total amount of the nitrile group-containing monomers.

<Monomer Represented by Formula (I)>

There is no particular restriction on the monomer represented by Formula (I).

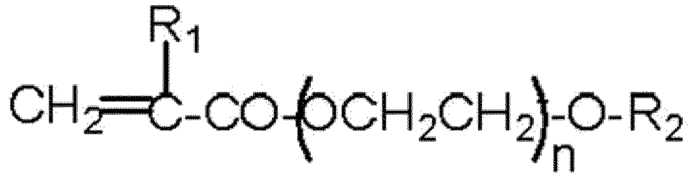 (I)

In Formula (I), $R_1$ is H (hydrogen atom) or $CH_3$ (methyl group), $R_2$ is H (hydrogen) or a monovalent hydrocarbon group, and n is an integer from 1 to 50.

In Formula (I), n is an integer from 1 to 50, preferably an integer from 2 to 30, and more preferably an integer from 2 to 10.

In Formula (I), $R_2$ is hydrogen atom or a monovalent hydrocarbon group, for example, preferably a monovalent hydrocarbon group having from 1 to 50 carbon atoms, more preferably a monovalent hydrocarbon group having from 1 to 25 carbon atoms, and still more preferably a monovalent hydrocarbon group having from 1 to 12 carbon atoms.

In a case in which $R_2$ is a hydrogen atom or a monovalent hydrocarbon group having from 1 to 50 carbon atoms, there is a tendency that sufficient resistance to swelling by an electrolyte solution may be obtained. Examples of such a hydrocarbon group include an alkyl group and a phenyl group. $R_2$ is particularly appropriately an alkyl group having from 1 to 12 carbon atoms or a phenyl group. An alkyl group may be a straight chain, a branched chain, or cyclic.

At least one hydrogen atom of an alkyl group or a phenyl group constituting $R_2$ may be substituted with a substituent. In a case in which $R_2$ is an alkyl group, examples of the substituent include a halogen atom such as a fluorine atom, chlorine atom, bromine atom, or iodine atom; a substituent having a nitrogen atom; a substituent having a phosphorus atom; and an aromatic ring. In a case in which $R_2$ is a phenyl group, examples of a substituent include a halogen atom such as a fluorine atom, chlorine atom, bromine atom, or iodine atom; a substituent having a nitrogen atom; a substituent having a phosphorus atom; an aromatic ring; and a cycloalkyl group having from 3 to 10 carbon atoms.

The monomer represented by Formula (I) may include a commercial product and a synthetic product. Specific examples of a commercially available monomer represented by Formula (I) include 2-methoxyethyl acrylate, ethoxydiethylene glycol acrylate (trade name: LIGHT ACRYLATE EC-A, manufactured by Kyoeisha Chemical Co., Ltd.), methoxytriethylene glycol acrylate (trade name: LIGHT ACRYLATE MTG-A, manufactured by Kyoeisha Chemical Co., Ltd.; and trade name: NK ESTER AM-30Q manufactured by Shin-Nakamura Chemical Co., Ltd.), methoxy poly(n=9) ethylene glycol acrylate (trade name: LIGHT ACRYLATE 130-A, manufactured by Kyoeisha Chemical Co., Ltd.; and trade name: NK ESTER AM-90Q manufactured by Shin-Nakamura Chemical Co., Ltd.), methoxy poly(n=13) ethylene glycol acrylate (trade name: NK ESTER AM-130Q manufactured by Shin-Nakamura Chemical Co., Ltd.), methoxy poly(n=23) ethylene glycol acrylate (trade name: NK ESTER AM-230Q manufactured by Shin-Nakamura Chemical Co., Ltd.), octoxy poly(n=18) ethylene glycol acrylate (trade name: NK ESTER A-OC-18E, manufactured by Shin-Nakamura Chemical Co., Ltd.), phenoxydiethylene glycol acrylate (trade name: LIGHT ACRYLATE P-200A, manufactured by Kyoeisha Chemical Co., Ltd.; and trade name: NK ESTER AMP-20GY, manufactured by Shin-Nakamura Chemical Co., Ltd.), phenoxy poly(n=6) ethylene glycol acrylate (trade name: NK ESTER AMP-60G, manufactured by Shin-Nakamura Chemical Co., Ltd.), nonylphenol EO adduct(n=4) acrylate (trade name: LIGHT ACRYLATE NP-4EA, manufactured by Kyoeisha Chemical Co., Ltd.), nonylphenol EO adduct(n=8) acrylate (trade name: LIGHT ACRYLATE NP-8EA, manufactured by Kyoeisha Chemical Co., Ltd.), methoxydiethylene glycol methacrylate (trade name: LIGHT ESTER MC, manufactured by Kyoeisha Chemical Co., Ltd.; and trade name: NK ESTER M-20G, manufactured by Shin-Nakamura Chemical Co., Ltd.), methoxytriethylene glycol methacrylate (trade name: LIGHT ESTER MTG, manufactured by Kyoeisha Chemical Co., Ltd.), methoxy poly(n=9) ethylene glycol methacrylate (trade name: LIGHT ESTER 130MA, manufactured by Kyoeisha Chemical Co., Ltd.; and trade name: NK ESTER M-90G, manufactured by Shin-Nakamura Chemical Co., Ltd.), methoxy poly(n=23) ethylene glycol methacrylate (trade name: NK ESTER M-230G, manufactured by Shin-Nakamura Chemical Co., Ltd.), and methoxy poly(n=30) ethylene glycol methacrylate (trade name: LIGHT ESTER 041MA, manufactured by Kyoeisha Chemical Co., Ltd.). In this regard, "EO" means ethylene oxide.

Among them, methoxytriethylene glycol acrylate (in Formula (I), $R_1$ is hydrogen atom, $R_2$ is methyl group, and n is 3) is more preferable from the viewpoint of copolymerization reactivity with the nitrile group-containing monomer, or the like. The monomers represented by Formula (I) may be used singly or in a combination of two or more kinds thereof.

<Monomer Represented by Formula (II)>

If necessary, the monomer represented by Formula (II) may be used. There is no particular restriction on a

monomer represented by Formula (II).

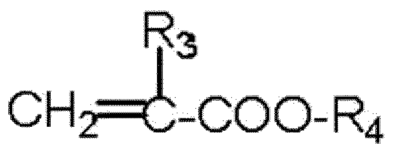

(II)

In Formula (II), $R_3$ is hydrogen atom, or a methyl group. $R_4$ is an alkyl group having from 4 to 100 carbon atoms.

In Formula (II), $R_4$ is an alkyl group having from 4 to 100 carbon atoms, preferably an alkyl group having from 4 to 50 carbon atoms, more preferably an alkyl group having from 6 to 30 carbon atoms, and still more preferably an alkyl group having from 8 to 15 carbon atoms.

In a case in which the carbon number of the alkyl group is four or more, sufficient flexibility may be obtained. In a case in which the carbon number of the alkyl group is 100 or less, sufficient resistance to swelling by an electrolyte solution may be obtained.

An alkyl group constituting $R_4$ may be a straight chain, a branched chain, or cyclic.

At least part of hydrogens in an alkyl group constituting $R_4$ may be substituted with a halogen atom as a fluorine atom, chlorine atom, bromine atom, or iodine atom; a substituent having a nitrogen atom; a substituent having a phosphorus atom; and an aromatic ring, or the like. Examples of an alkyl group constituting $R_4$ include saturated alkyl group of a straight chain, branched chain or cyclic, as well as a halogenated alkyl group such as a fluoroalkyl group, a chloroalkyl group, a bromoalkyl group and an alkyl iodide group.

The monomer represented by Formula (II) may include a commercial product and a synthetic product. Specific examples of a monomer represented by Formula (II) include a (meth)acrylic acid ester including an alkyl having from 4 to 100 carbon atoms, such as *n*-butyl (meth)acrylate, isobutyl (meth)acrylate, *t*-butyl (meth)acrylate, amyl (meth)acrylate, isoamyl (meth)acrylate, hexyl (meth)acrylate, heptyl (meth)acrylate, octyl (meth)acrylate, 2-ethylhexyl (meth)acrylate, nonyl (meth)acrylate, decyl (meth)acrylate, isodecyl (meth)acrylate, lauryl (meth)acrylate, tridecyl (meth)acrylate, hexadecyl (meth)acrylate, stearyl (meth)acrylate, isostearyl (meth)acrylate, cyclohexyl (meth)acrylate, and isobornyl (meth)acrylate.

Further, In a case in which $R_4$ is a fluoroalkyl group, examples of the monomer represented by Formula (II) include an acrylate compound such as 1,1-bis(trifluoromethyl)-2,2,2-tiifluoroethyl acrylate, 2,2,3,3,4,4,4-heptafluorobutyl acrylate, 2,2,3,4,4,4-hexafluorobutyl acrylate, nonafluoroisobutyl acrylate, 2,2,3,3,4,4,5,5-octafluoropentyl acrylate, 2,2,3,3,4,4,5,5,5-nonafluoropentyl acrylate, 2,2,3,3,4,4,5,5,6,6,6-undecafluorohexyl acrylate, 2,2,3,3,4,4,5,5,6,6,7,7,8,8,8-pentadecafluorooctyl acrylate, 3,3,4,4,5,5,6,6,7,7,8,8,9,9,10,10,10-heptadecafluorodecyl acrylate, and 2,2,3,3,4,4,5,5,6,6,7,7,8,8,9,9,10,10,10-nonadecafluorodecyl acrylate; and a methacrylate compound such as nonafluoro-t-butyl methacrylate, 2,2,3,3,4,4,4-heptafluorobutyl methacrylate, 2,2,3,3,4,4,5,5-octafluoropentyl methacrylate, 2,2,3,3,4,4,5,5,6,6,7,7-dodecafluoroheptyl methacrylate, heptadecafluorooctyl methacrylate, 2,2,3,3,4,4,5,5,6,6,7,7,8,8,8-pentadecafluorooctyl methacrylate, and 2,2,3,3,4,4,5,5,6,6,7,7,8,8,9,9-hexadecafluorononyl methacrylate.

The monomers represented by Formula (II) may be used singly or in a combination of two or more kinds thereof.

<Other Monomer>

The resin as a binder may further has a structural unit derived from another monomer, in addition to a structural unit derived from the nitrile group-containing monomer, a structural unit derived from a monomer represented by Formula (I), and a structural unit derived from a monomer represented by Formula (II).

There is no particular restriction on such another monomer, and examples thereof include a short chain (meth)acrylic acid ester such as methyl (meth)acrylate, ethyl (meth)acrylate, and propyl (meth)acrylate, a halogenated vinyl such as vinyl chloride, vinyl bromide, and vinylidene chloride, maleic acid imide, phenylmaleimide, (meth)acrylamide, styrene, $\alpha$-methylstyrene, vinyl acetate, sodium (meth)allyl sulfonate, sodium (meth)allyloxybenzene sulfonate, sodium styrene sulfonate, and 2-acrylamide-2-methylpropane sulfonic acid and a salt thereof. Such another monomers may be used singly or in a combination of two or more kinds thereof. In this regard, (meth)acrylic means acrylic or methacrylic. Further, (meth)allyl means allyl or methallyl.

A resin as a binder may or may not have a structural unit including a carboxyl group, such that is derived from a carboxyl-containing monomer.

There is no particular restriction on a carboxyl group-containing monomer, and examples thereof include: an acrylic carboxyl group-containing monomer such as acrylic acid, and methacrylic acid; a crotonic carboxyl group-containing monomer such as crotonic acid; a maleic carboxyl group-containing monomer such as maleic acid and an anhydride thereof; an itaconic carboxyl group-containing monomer such as itaconic acid and an anhydride thereof; and

a citraconic carboxyl group-containing monomer such as citraconic acid and an anhydride thereof. The carboxyl group-containing monomers may be used singly or in a combination of two or more kinds thereof.

Among them, acrylic acid is preferable from the viewpoint of easiness of polymerization, cost performance, softness and flexibility of an electrode, or the like. In a case in which acrylic acid and methacrylic acid are used as a carboxyl group-containing monomer, acrylic acid is contained, for example, in a range of from 5% by mass to 95% by mass, and preferably in a range of from 50% by mass to 95% by mass, with respect to the total amount of carboxyl group-containing monomers.

<Content of Structural Unit derived from Each Monomer>

There is no particular restriction on a ratio of structural units derived from each monomer in the resin as a binder.

A ratio of the structural unit derived from the nitrile group-containing monomer is, for example, preferably from 50% by mol to less than 100% by mol, more preferably from 80% by mol to less than 100% by mol, and still more preferably from 90% by mol to less than 100% by mol.

With respect to 1 mol of a structural unit derived from a nitrile group-containing monomer, a structural unit derived from a monomer represented by Formula (I) is, for example, preferably from 0.001 mol to 0.2 mol, more preferably from 0.003 mol to 0.05 mol, and still more preferably 0.005 mol to 0.035 mol.

In a case in which the ratio of the structural unit derived from a monomer represented by Formula (I) with respect to 1 mol of the structural unit derived from the nitrile group-containing monomer is from 0.001 mol to 0.2 mol, there is a tendency that the adhesiveness to a current collector, especially to a current collector using an aluminum foil, and the resistance to swelling by an electrolyte solution become excellent, and the softness and flexibility of electrode become favorable.

In a case in which the resin as a binder includes the structural unit derived from a monomer represented by Formula (II), a ratio of the structural unit derived from a monomer represented by Formula (II) with respect to 1 mol of the structural unit derived from the nitrile group-containing monomer is, for example, preferably from 0.001 mol to 0.2 mol, more preferably from 0.003 mol to 0.05 mol, and still more preferably 0.005 mol to 0.02 mol.

In a case in which the ratio of the structural unit derived from a monomer represented by Formula (II) is from 0.001 mol to 0.2 mol, there is a tendency that the adhesiveness to a current collector, especially to a current collector using an aluminum foil, and the resistance to swelling by an electrolyte solution become excellent, and the softness and flexibility of electrode become favorable.

In a case in which the resin as a binder includes the structural unit derived from a monomer represented by Formula (II), a ratio of a total amount of the structural unit derived from a monomer represented by Formula (I) and the structural unit derived from a monomer represented by Formula (II) with respect to 1 mol of the structural unit derived from the nitrile group-containing monomer is, for example, preferably from 0.001 mol to 0.2 mol, more preferably from 0.003 mol to 0.05 mol, and still more preferably 0.005 mol to 0.035 mol.

In a case in which the resin as a binder includes a structural unit derived from another monomer, a ratio of the structural unit derived from another monomer with respect to 1 mol of a structural unit derived from a nitrile group-containing monomer is, for example, preferably from 0.005 mol to 0.1 mol, more preferably from 0.01 mol to 0.06 mol, and still more preferably from 0.03 mol 0.05 mol.

The binder may include another resin other than the resin having the structural unit derived from nitrile group-including monomer. Specific examples of another resin include: a resin polymer such as polyethylene, polypropylene, poly(ethylene terephthalate), poly(methyl methacrylate), polyimide, aromatic polyamide, cellulose, or nitrocellulose; a rubber polymer such as SBR (styrene-butadiene rubber), NBR (acrylonitrile-butadiene rubber), fluorinated rubber, isoprene rubber, butadiene rubber, or ethylene-propylene rubber; a thermoplastic elastomer polymer such as a styrene-butadiene-styrene block copolymer or a hydrogenated product thereof, an EPDM (ethylene-propylene-diene terpolymer), or a styrene-isoprene-styrene block copolymer or a hydrogenated product thereof; a soft resin polymer such as syndiotactic 1,2-polybutadiene, poly(vinyl acetate), an ethylene-vinyl acetate copolymer, or a propylene-$\alpha$-olefin copolymer; a fluorocarbon polymer such as poly(vinylidene fluoride), polytetrafluoroethylene, fluorinated poly(vinylidene fluoride), a polytetrafluoroethylene-ethylene copolymer, or a polytetrafluoroethylene-vinylidene fluoride copolymer; and a polymer composition having ion conductivity of an alkali metal ion (especially lithium ion). In a case in which another resin is use in combination with the resin having the structural unit derived from nitrile group-including monomer, use of poly(vinylidene-fluoride) is preferable, from the viewpoint of high density.

From the viewpoint of a sufficient adhesion of the positive electrode active material to enhance a mechanical strength of the positive electrode, thereby stabilizing battery performance such as a charge and discharge cycle performance, a content of the binder is preferably 0.1% by mass or more, more preferably 1% by mass or more, and still more preferably 2% by mass or more, with respect to the total solid amount of a positive electrode material mixture. From the viewpoint of improvement of battery capacity and conductivity, the content of the binder is preferably 30% by mass or less, more preferably 20% by mass or less, and still more preferably 10% by mass or less.

The content of the binder is preferably from 0.1% by mass to 30% by mass, more preferably 1% by mass to 20% by mass, and still more preferably from 2% by mass to 10% by mass, with respect to the total solid amount of the positive electrode material mixture.

The solvent used for dispersing the positive electrode active material, the electroconductive agent, the binder or the like includes an organic solvent such as *N*-methyl-2-pyrrolidone.

<Method of Producing Positive Electrode>

A positive electrode can be obtained, for example, by applying the forming a positive electrode material mixture onto a surface of a current collector, and drying thereof to form the forming a positive electrode material mixture layer. If necessary, a density of the positive electrode material mixture layer may be increased by pressing or the like.

Materials for a current collector of a positive electrode includes aluminum, titanium, stainless steel, nickel, and electrically conductive polymer, and from the viewpoint of improvement of adhesiveness, electrical conductivity and oxidation resistance, aluminum, copper or the like whose surface is subjected to a treatment for sticking carbon, nickel, titanium, silver or the like thereto may be used.

From the viewpoint of further improving energy density and input-output performance, the amount of a positive electrode material mixture applied to one side of a current collector is preferably from 100 $g/m^2$ to 250 $g/m^2$, more preferably from 110 $g/m^2$ to 200 $g/m^2$, and still more preferably from 130 $g/m^2$ to 170 $g/m^2$ in terms of the solid content of a positive electrode material mixture.

From the viewpoint of further improving energy density and input-output performance, the density of a positive electrode material mixture layer is preferably from 1.8 $g/cm^3$ to 3.3 $g/cm^3$, more preferably from 2.0 $g/cm^3$ to 3.2 $g/cm^3$, and still more preferably from 2.2 $g/cm^3$ to 2.8 $g/cm^3$ in terms of the solid content of a positive electrode material mixture.

<Negative Electrode>

A negative electrode (negative electrode plate) contains a negative electrode active material in which lithium ions are inserted and eliminated at an electric potential of 1.2 V or more with respect to an electric potential of lithium. For example, a negative electrode may be formed such that it has a current collector and a negative electrode material mixture layer which is formed on both sides or one side of the current collector, and the negative electrode material mixture layer contains a specific negative electrode active material.

The negative electrode is, for example, obtained by mixing a negative electrode active material and, if necessary adding an appropriate the electroconductive agent, the binder, the solvent and the like, to form a pasty positive electrode material mixture, and coating the pasty positive electrode material mixture onto a surface of a current collector, followed by drying.

(Negative Electrode Active Material)

A negative electrode active material includes a specific negative electrode active material. From the viewpoint of further improving energy density of the lithium-ion secondary battery, a content of the specific negative electrode active material is preferably from 50 % by mass to 100% by mass, more preferably from 70% by mass to 100% by mass, and still more preferably from 80% by mass to 100% by mass, with respect to the total amount of the negative electrode active material.

A specific negative electrode active material is preferably an active material in which when a lithium-ion secondary battery is discharged under ordinary use conditions, 50% or more of the amount of electricity discharged corresponds to a negative electrode electric potential in a negative electrode operating region of 1.2 V or more with respect to an electric potential of lithium, and it is more preferably an active material in which lithium ion insertion and elimination reactions are induced at an electric potential of 1.2 V or more with respect to an electric potential of lithium with electrochemical capacity of at least 100 mAh/g per unit mass of the active material.

Specifically, examples of a specific negative electrode active material include, for example, a lithium titanium complex oxide, molybdenum oxide, niobium pentoxide, iron sulfide, and titanium sulfide. Of these, a lithium titanium complex oxide (LTO) is preferable.

A lithium titanium complex oxide is preferably a lithium titanium complex oxide having a spinel structure. The basic composition formula of a lithium titanium complex oxide having a spinel structure is $Li[Li_{1/3}Ti_{5/3}]O_4$.

For further stabilization of the crystal structure of a lithium titanium complex oxide having a spinel structure, a part of Li, Ti, or O sites of a lithium titanium complex oxide having a spinel structure may be substituted with another element.

Further, excessive lithium may be made present in a crystal of a lithium titanium complex oxide having a spinel structure. Furthermore, a lithium titanium complex oxide having a spinel structure, which O site is made to have a defect,

may be used.

Examples of a metal element able to replace a Li or Ti site of a lithium titanium complex oxide having a spinel structure include Nb, V, Mn, Ni, Cu, Co, Zn, Sn, Pb, Al, Mo, Ba, Sr, Ta, Mg, and Ca. The Li or Ti site of a lithium titanium complex oxide having a spinel structure may be substituted with one kind, or two or more kinds of these metal elements.

Examples of another element able to replace an O site of a lithium titanium complex oxide having a spinel structure include F and B. The O site of a lithium titanium complex oxide having a spinel structure may be substituted with one kind, or two or more kinds of such other elements.

From the viewpoint of improvement of storage characteristics, a BET specific surface area of the specific negative electrode active material is preferably less than 40 $m^2/g$, more preferably less than 30 $m^2/g$, still more preferably less than 20 $m^2/g$, and further more preferably less than 15 $m^2/g$. From the viewpoint of improvement of input-output performance, the BET specific surface area of the specific negative electrode active material is preferably 0.1 $m^2/g$ or more, more preferably 0.5 $m^2/g$ or more, still more preferably 1 $m^2/g$ or more, and further more preferably 2 $m^2/g$ or more.

The BET specific surface area of the specific negative electrode active material is preferably 0.1 $m^2/g$ or more and less than 40 $m^2/g$, more preferably 0.5 $m^2/g$ or more and less than 30 $m^2/g$, still more preferably 1 $m^2/g$ or more and less than 20 $m^2/g$, and further more preferably 2 $m^2/g$ or more and less than 15 $m^2/g$.

The BET specific surface area of the specific negative electrode active material may be measured by a method similar to a lithium nickel manganese complex oxide having a spinel structure.

An average diameter D50 of the specific negative electrode active material (in a case in which primary particles aggregate to form a secondary particle, the average diameter D50 means the secondary particle) is, from the viewpoint of a particle dispersibility, preferably from 0.5 $\mu m$ to 100 $\mu m$, and more preferably from 1 $\mu m$ to 50 $\mu m$.

The average diameter D50 of the specific negative electrode active material may be measured by a method similar to that for a lithium nickel manganese complex oxide having a spinel structure.

The negative electrode active material may include another negative electrode active material other than the specific negative electrode active material. Examples of another negative electrode active material include a carbon material.

A content of the specific negative electrode active material is preferably 50% by mass or more, more preferably 70% by mass or more, and still more preferably 90% by mass or more, and further more preferably 95% by mass or more, with respect to a total amount of a negative electrode active material.

(Electroconductive agent)

The negative electrode may include an electroconductive agent (hereinafter also referred to as a "negative electroconductive agent"). From the viewpoint of improving further input-output performance, the electroconductive agent is preferably acetylene black.

From the viewpoint of input-output performance, a content of the negative electroconductive agent is preferably 1% by mass or more, more preferably 2% by mass or more, and still more preferably 3% by mass or more, with respect to the total solid amount of a negative electrode material mixture. From the viewpoint of improvement of battery capacity, the content of the negative electroconductive agent is preferably 15% by mass or less, more preferably 12% by mass or less, and still more preferably 10% by mass or less.

The content of the negative electroconductive agent is preferably from 1% by mass to 15% by mass, more preferably 2% by mass to 12% by mass, and still more preferably from 3% by mass to 10% by mass, with respect to the total solid amount of a negative electrode material mixture.

(Binder and Solvent)

The binders able to use for a negative electrode are similar to the binders for a positive electrode.

From the viewpoint of a sufficient adhesion of the negative electrode active material to enhance a mechanical strength of the negative electrode, thereby stabilizing battery performance such as a charge and discharge cycle performance, a content of the binder is preferably 0.1% by mass or more, more preferably 0.5% by mass or more, and still more preferably 1% by mass or more, with respect to the total solid amount of a negative electrode material mixture. From the viewpoint of improvement of battery capacity and conductivity, the content of the binder is preferably 40% by mass or less, more preferably 25% by mass or less, and still more preferably 15% by mass or less.

The content of the binder material is preferably from 0.1% by mass to 40% by mass, more preferably 0.5% by mass to 25% by mass, and still more preferably from 1% by mass to 15% by mass, with respect to the total solid amount of a negative electrode material mixture.

The solvent used for dispersing the negative electrode active material, the electroconductive agent, the binder or the like includes an organic solvent such as *N*-methyl-2-pyrrolidone.

<Method of Producing Negative Electrode>

A negative electrode can be obtained, for example, by applying the forming an negative electrode material mixture onto a surface of a current collector, and drying thereof to form the forming a negative electrode material mixture layer. If necessary, a density of the negative electrode material mixture layer may be increased by pressing or the like.
Materials for a current collector of a negative electrode includes copper, stainless steel, nickel, aluminum, titanium, and electrically conductive polymer, aluminum-cadmium alloy, and from the viewpoint of improvement of adhesiveness, electrical conductivity and oxidation resistance, aluminum, copper or the like, whose surface is subjected to a treatment for sticking carbon, nickel, titanium, silver or the like thereto may be used.
From the viewpoint of further improving energy density and input-output performance, an amount of a negative electrode material mixture applied to one side of a current collector is preferably from 10 $g/m^2$ to 225 $g/m^2$, more preferably from 50 $g/m^2$ to 200 $g/m^2$, and still more preferably from 80 $g/m^2$ to 160 $g/m^2$ in terms of the solid content of a negative electrode material mixture.
From the viewpoint of further improving energy density and input-output performance, a density of a negative electrode material mixture layer is preferably from 1.0 $g/cm^3$ to 3.3 $g/cm^3$, more preferably from 1.2 $g/cm^3$ to 3.2 $g/cm^3$, and still more preferably from 1.4 $g/cm^3$ to 2.8 $g/cm^3$ in terms of the solid content of a negative electrode material mixture.

<Separator>

The lithium-ion secondary battery in the disclosure may has a separator between the positive electrode and the negative electrode.
There is no particular restriction on a separator, insofar as it has ion permeability while insulating electronically between the positive electrode and the negative electrode, and is resistant to oxidizing environment at the positive electrode and to reducing environment at the negative electrode. As a material for a separator satisfying such characteristics, a resin, an inorganic substance, glass fiber or the like may be used.
As the resin, an olefinic polymer, a fluorinated polymer, a cellulosic polymer, polyimide, nylon or the like are used. Among them, it should be preferably selected from materials which are stable against an electrolyte solution and superior in solution retention, and preferably a polyolefin such as polyethylene and polypropylene. Examples of shape of the separator include a porous sheet, or a nonwoven fabric.
An oxide such as alumina and silicon dioxide, a nitride such as aluminum nitride and silicon nitride, a sulfate such as barium sulfate and calcium sulfate, or the like are used as the inorganic substance. They may be in glass state. For example, a substrate in a thin film shape such as a nonwoven fabric, a woven fabric and a microporous film, to which the inorganic substance in a fiber shape or a particle shape is stuck, may be used as a separator. A substrate in a thin film shape with a pore diameter of from 0.01 μm to 1 μm and a thickness of from 5 μm to 50 μm may be used favorably.
Further, a complex porous layer formed from the inorganic substance in a fiber shape or a particle shape using a binder such as a resin may be used as a separator. Alternatively, the complex porous layer may be formed on a surface of a positive electrode or a negative electrode as a separator. Alternatively, the complex porous layer may be formed on a surface of another separator to become a multiple-layer separator. For example, a complex porous layer may be formed on a surface of a positive electrode, or on a side of a separator facing a positive electrode by binding alumina particles with a 90% particle size (D90) of less than 1 μm using a fluorinated resin as a binder.

<Electrolyte Solution>

An electrolyte solution contains a lithium salt (namely, electrolyte), and a nonaqueous solvent dissolving thereof.
The nonaqueous solvent in the disclosure includes dimethyl carbonate (DMC), ethylene carbonate (EC), diethyl carbonate (DEC), propylene carbonate (PC), trifluoroethyl phosphate (TFEP), ethyl methyl sulfone (EMS), vinylene carbonate (VC), methyl ethyl carbonate, γ-butyrolactone, acetonitrile, 1,2-dimethoxyethane, dimethoxymethane, tetrahydrofuran, dioxolane, methylene chloride and methyl acetate. Among them, as the nonaqueous solvent, dimethyl carbonate is preferable.
From the viewpoint of improving cycle performance, a content of dimethyl carbonate is preferably more than 70% by volume, more preferably 75% by volume or more, still more preferably 85% by volume or more, and further more preferably 90% by volume or more, with respect to the total amount of the nonaqueous solvent. While the content of dimethyl carbonate with respect to a total mass of the nonaqueous solvent may be 100% by volume, the content is preferably 95% by volume or less from the viewpoint of improvement of safety.
In a case in which the nonaqueous solvent includes another nonaqueous solvent other than dimethyl carbonate in combination, a content of another nonaqueous solvent is preferably less than 30% by volume, more preferably 25% by volume or less, sitll more preferably 15% by volume or less, further more preferably less than 10% by volume or less. While the content of another nonaqueous solvent may be 0% by volume, the content is preferably 5% by volume or

more from the viewpoint of improvement of safety.

In a case in which a nonaqueous solvent having a high flash point, such as EC,TFEP, EMS or the like, is used, such a nonaqueous solvent may be inferior in oxidation resistance, while the electrolyte solution becomes safer. Therefore, in a case in which such another nonaqueous solvent other than DMC is used, a content of such another nonaqueous solvent is preferably less than 30% by volume with respect to the total mass of the nonaqueous solvent. In a case in which the content is less than 30% by volume, there is a tendency that reduction of cycle performance is suppressed.

Examples of a lithium salt include $LiPF_6$ (lithium hexafluorophosphate), $LiBF_4$, LiFSI (lithium bis(fluorosulfonyl)imide), LiTFSI (lithium bis(trifluoromethanesulfonyl)imide), $LiClO_4$, LiB $(C_6H_5)_4$, $LiCH_3SO_3$, $LiCF_3SO_3$, $LiN(SO_2F)_2$, $LiN(SO_2CF_3)_2$, and $LiN(SO_2CF_2CF_3)_2$. The lithium salts may be used singly or in a combination of two or more kinds thereof.

Among them, $LiPF_6$ (lithium hexafluorophosphate) is preferable, from the viewpoint of judging on the whole by solubility in a nonaqueous solvent, and charge and discharge characteristics, input-output performance, charge and discharge cycle performance or the like when a lithium-ion secondary battery is assembled.

A concentration of the lithium salt in the electrolyte solution is preferably from 0.8 mol/L to 2.0 mol/L, more preferably from 1.0 mol/L to 2.0 mol/L, and still more preferably from 1.2 mol/L to 2.0 mol/L, from the viewpoint of improvement of safety. By adjusting the concentration of the lithium salt high so as to be from 1.2 mol/L to 2.0 mol/L, a flash point of an electrolyte solution increases to be safer.

The electrolyte solution may include an additive, if necessary. In a case in which the electrolyte solution includes an additive, there is a tendency that storage characteristics at high temperatures, charge and discharge cycle performance, and input-output performance are enhanced.

There is no particular restriction on an additive, insofar as it is an additive for a nonaqueous electrolyte solution of a lithium-ion secondary battery. Specifically, examples of an additive include a heterocyclic compound including at least one of nitrogen or sulfur, a cyclic carboxylic acid ester, a fluorine-containing cyclic carbonate, a fluorine-containing borate ester, and a compound having an unsaturated bond in the molecule. Further, in addition to the above additive, another additive, such as an overcharge prevention agent, a negative electrode film-form agent, a positive electrode protection agent, and a high input-output agent, may be used according to a required function.

<Capacitance Ratio between Negative Electrode Capacitance for Negative Electrode and Positive Electrode Capacitance for Positive Electrode>

The capacitance ratio (negative electrode capacitance/positive electrode capacitance) is preferably less than 1 from the viewpoints of cycle performance and energy density. In a case in which the capacitance ratio (negative electrode capacitance/positive electrode capacitance) is less than 1, there is a tendency that a decomposition reaction of an electrolyte solution due to a high electric potential of a positive electrode is unlikely to be induced, which results in the improvement of charge and discharge cycle performance of a lithium-ion secondary battery.

The capacitance ratio (negative electrode capacitance/positive electrode capacitance) is preferably from 0.6 to less than 1. In a case in which the capacitance ratio is 0.6 or more, there is a tendency that battery capacity is further enhanced, which results in the improvement of volume energy density. The capacitance ratio (negative electrode capacitance/positive electrode capacitance) is more preferably from 0.7 to 0.98, and from the viewpoint of improving the volume energy density and input performance, it is still more preferably from 0.75 to 0.95.

The term "negative electrode capacity" and the term "positive electrode capacity" each mean the maximum capacity which can be reversibly utilized, the maximum capacity being obtained when an electrochemical cell including metallic lithium as a counter electrode is formed to perform constant current and constant voltage charge and then constant current discharge.

The negative electrode capacity represents "discharge capacity of negative electrode" and the positive electrode capacity represents "discharge capacity of positive electrode". Such "discharge capacity of negative electrode" is defined as one calculated in a charge and discharge apparatus in leaving of a lithium ion inserted into the negative electrode active material. Such "discharge capacity of positive electrode" is defined as one calculated in a charge and discharge apparatus in leaving of a lithium ion from the positive electrode active material.

For example, in a case in which the positive electrode active material is a lithium nickel manganese complex oxide having a spinel structure and the negative electrode active material is a lithium titanium complex oxide (LTO), the "positive electrode capacity" and the "negative electrode capacity" mean respective capacities which are obtained when the charge and discharge where voltage ranges are from 4.95 V to 3.5 V and from 1.0 V to 2.0 V, respectively, and a current density in constant current charge and constant current discharge is 0.1 $mA/cm^2$ is performed in the electrochemical cell for evaluation.

Regarding the above-mentioned electrochemical cell, it is defined that the direction of lithium ion insertion into a negative electrode active material corresponds to "charge" and the direction of lithium ion elimination therefrom corresponds to "discharge." Regarding the electrochemical cell, it is further defined that the direction of lithium ion elimination

from a positive electrode active material corresponds to "charge" and the direction of lithium ion insertion thereinto corresponds to "discharge."

The positive electrode capacitance of the lithium-ion secondary battery in the disclosure tends to increase with an increase in the amount of a positive electrode active material contained in a positive electrode and also tends to decrease with a decrease in the amount of the positive electrode active material. The negative electrode capacitance increases or decreases depending on the amount of a negative electrode active material as in the case of positive electrode capacitance. By controlling the positive electrode capacitance and the negative electrode capacitance, it becomes possible to adjust the capacitance ratio (negative electrode capacitance/positive electrode capacitance) of the lithium-ion secondary battery in the disclosure to less than 1.

<Shape and Other Factors of Lithium-ion Secondary Battery>

The lithium-ion secondary battery in the disclosure may have a various shape such as a rolled shape (cylinder shape), a layered shape, a coin shape, a laminated shape, or the like. A lithium-ion secondary battery having an arbitrary shape is completed by positioning a separator between a positive electrode and a negative electrode to form an electrode body, using a current collecting lead or the like to connect between a positive electrode terminal and a negative electrode terminal, which extend outside from a positive electrode current collector and a negative electrode current collector, respectively, and hermetically enclosing the electrode body together with an electrolyte solution in a battery case.

Hereinafter, an example of the configuration in which the lithium-ion secondary battery in the disclosure has a laminated shape is described. However, the disclosure is not limited thereto. In another embodiment, for example, a layered body obtained by layering a positive electrode plate and a negative electrode plate via a separator is rolled to form a rolled lithium-ion secondary battery or the like.

Figure 1 is a perspective cross-sectional view illustrating one example of a lithium-ion secondary battery in the disclosures. Figure 2 is a perspective view illustrating a positive electrode plate, a negative electrode plate and a separator forming an electrode assembly of the lithium-ion secondary battery in Figure 1.

The size of each member in each of the drawings is conceptual, and a relative relationship in size between members is not limited to the size. The same reference numeral is provided to members having substantially the same function as each other throughout all the drawings, and any description overlapped may be omitted.

In Figure 1, a lithium-ion secondary battery 10 is formed such that a laminate film 6 for forming a battery exterior body accommodates an electrode assembly 20 and an electrolyte solution, and a positive electrode collector tab 2 and a negative electrode collector tab 4 extend outside of the battery exterior body. As illustrated in Figure 2, an electrode assembly 20 is formed by layering a positive electrode plate 1 provided with a positive electrode collector tab 2, a separator 5, and a negative electrode plate 3 provided with a negative electrode collector tab 4.

Sizes, shapes, and the like of a positive electrode plate, a negative electrode plate, a separator, an electrode assembly, and a battery may be optionally determined and are not limited to those illustrated in Figures 1 and 2.

Examples of a material for a positive electrode plate and a negative electrode plate in a laminate film 6 include aluminum, copper, and stainless steel.

Embodiments of the lithium-ion secondary battery of the present invention are described above. However, these embodiments merely exemplified, and the lithium-ion secondary battery of the present invention can be made with a variety of changes and modifications in a variety of embodiments including these embodiments based on the knowledge of a person skilled in the art.

According to the present invention, it is possible to provide a lithium-ion secondary battery capable of suppressing the amount of a decomposition gas generated even with the use of a positive electrode active material showing a high operating electric potential.

## Examples

The present embodiment will be described in more details below by way of Examples, provided that the present invention be not restricted in any way by the following Examples

### [Example 1]

A pasty positive electrode material mixture was obtained by mixing 93 parts by mass of a lithium nickel manganese complex oxide having a spinel structure ($LiNi_{0.5}Mn_{1.5}O_4$) as a positive electrode active material, 2.5 parts by mass of acetylene black which is a non-crystalline carbon (manufactured by Denka Company Limited, hereinafter also referred to as "AB Powder") as an electroconductive agent, 2.5 parts by mass of UP5$\alpha$ as graphite (manufactured by Nippon Graphite Industries, Co., Ltd.) as an electroconductive agent, and 2 parts by mass of a copolymer obtained by adding acrylic acid and a linear ether group to a polyacrylonitrile structure (the binder resin composition in Synthesis

Example 1) as a binder, adding an adequate amount of N-methyl-2-pyrrolidone, and kneading the resulting mixture. This positive electrode material mixture was applied to one side of aluminum foil having a thickness of 20 μm as a positive electrode current collector in a substantially even and uniform manner such that the solid content of the positive electrode material mixture was adjusted to 140 g/$m^2$. Thereafter, drying treatment was performed, thereby obtaining a dry coating film. This dry coating film was pressed to be compressed such that the density of the solid content of the positive electrode material mixture reached 2.3 g/$cm^3$, thereby producing a sheet-like positive electrode. The layer containing the positive electrode material mixture had a thickness of 60 μm. This positive electrode was cut to obtain a positive electrode plate having a width of 31 mm and a length of 46 mm, and a positive electrode collector tab was attached to the positive electrode plate as illustrated in Figure 2.

A pasty negative electrode material mixture was obtained by mixing 91 parts by mass of lithium titanate (LTO) which is a kind of lithium titanium complex oxide as a negative electrode active material, 4 parts by mass of acetylene black (manufactured by Denka Company Limited) as an electroconductive agent, and 5 parts by mass of polyvinylidene fluoride as a binder, adding an adequate amount of N-methyl-2-pyrrolidone, and kneading the resulting mixture. This negative electrode material mixture was applied to one side of copper foil having a thickness of 10 μm as a negative electrode current collector such that the solid content of the negative electrode material mixture was adjusted to 85 g/$m^2$. Thereafter, drying treatment was performed, thereby obtaining a dry coating film. This dry coating film was pressed to be compressed such that the density of the solid content of the negative electrode material mixture reached 1.9 g/$cm^3$, thereby producing a sheet-like negative electrode. The negative electrode material mixture layer had a thickness of 45 μm. This negative electrode was cut to obtain a negative electrode plate having a width of 30 mm and a length of 45 mm, and a negative electrode collector tab was attached to the negative electrode plate as illustrated in Figure 2.

Synthesis Example of the binder used for the positive electrode is shown below.

<Synthesis Example 1>

A 3-L separable flask equipped with a stirrer, a thermometer, a condenser and a nitrogen gas introduction tube was charged with 1804 g of purified water, the temperature was raised to 74°C with stirring in a condition of a flow rate of nitrogen gas of 200 mL/min, and then flowing of nitrogen gas was stopped. Next, an aqueous solution in which 0.968 g of ammonium persulfate as a polymerization initiator was dissolved in 76 g of purified water was added, and a mixed liquid of 183.8 g of acrylonitrile as a nitrile group-containing monomer, 9.7 g (a proportion of 0.039 mol with respect to 1 mol of acrylonitrile) of acrylic acid as a carboxyl group-containing monomer and 6.5 g (a proportion of 0.0085 mol with respect to 1 mol of acrylonitrile) of methoxy triethylene glycol acrylate (trade name: NK ESTER AM-30G produced by Shin-Nakamura Chemical Co., Ltd.) as a monomer was immediately dropped over 2 hours with the temperature of the reaction system being kept at 74°C ± 2°C. Subsequently, an aqueous solution in which 0.25 g of ammonium persulfate was dissolved in 21.3 g of purified water was additionally added to the reaction system suspended, the temperature was raised to 84°C, and then the reaction was allowed to progress for 2.5 hours with the temperature of the reaction system being kept at 84°C ± 2°C. Thereafter, the resultant was cooled to 40°C over 1 hour, then stirring was stopped, and the resultant was left to be cooled at room temperature overnight, thereby obtaining a reaction liquid in which a binder resin composition was precipitated. The reaction liquid was subjected to suction filtration, and a wet precipitate recovered was washed with 1800 g of purified water three times and then dried in vacuum at 80°C for 10 hours, thereby obtaining a binder resin composition.

(Production of Electrode Assembly)

The produced positive and negative electrode plates were positioned to face each other across a polyethylene microporous membrane separator having a thickness of 30 μm, a width of 35 mm, and a length of 50 mm, thereby producing a layered electrode assembly.

(Preparation of Electrolyte Solution)

An electrolyte solution was prepared by dissolving $LiPF_6$ as an electrolyte at a concentration of 2.0 mol/L in a nonaqueous solvent (with a volume ratio of EC:DMC of 1: 9) obtained by mixing ethylene carbonate (EC) and dimethyl carbonate (DMC).

(Production of Lithium-ion Secondary Battery)

The above-described electrode assembly was accommodated in a battery exterior body formed with an aluminum-made laminate film as illustrated in Figure 1. The electrolyte solution was injected into the battery exterior body.

Thereafter, an opening of the battery container was sealed such that the positive electrode collector tab and the negative electrode collector tab described above were allowed to extend outside, thereby producing a lithium-ion secondary battery in Example 1. The aluminum-made laminate film was a layered body of a polyethylene terephthalate (PET) film/aluminum foil/a sealant layer (polypropylene or the like).

[Examples 2 to 6, Comparative Example 1]

Lithium-ion secondary batteries were produced in Examples 2 to 6 and Comparative Example 1 as in Example 1 except that the positive electrode electroconductive agent was changed as described in Table 1. The following are graphites used herein.

JSP: Nippon Graphite Industries, Co., Ltd.
SCA: Hitachi Chemical Co., Ltd.
VGCF-H: SHOWA DENKO K.K.

(Measurement of R Value)

Raman spectroscopy was conducted for graphites used herein under the following conditions to obtain Raman spectroscopic spectra. An R value as a ratio of an intensity of a maximum peak observed in a range of from 1200 $cm^{-1}$ to 1400 $cm^{-1}$ (ID) and an intensity of a maximum peak observed in a range of from 1500 $cm^{-1}$ to 1650 $cm^{-1}$ (IG) was calculated for each obtained spectrum.

Raman spectroscopy was conducted using a laser Raman spectrophotometer (DXR Raman microscope manufactured by ThermoFisher Scientific Inc.) by setting a sample plate in such a manner as to position graphite flat and irradiating the sample plate with laser light. Measurement conditions are described below. Figures 3 to 6 depict the obtained Raman spectroscopic spectra.

Wavelength of laser light: 7800 Å (780 nm)
Laser output: 10 mW
Spectrometer: F signal
Entrance slit width: 800 μm
Total number of scans: 2 times
Exposure time: 30 seconds
Measurement range: From 1180 $cm^{-1}$ to 1730 $cm^{-1}$
Peak research: Background removal

[Comparative Example 2]

A pasty negative electrode material mixture was obtained by mixing 92 parts by mass of graphite as a negative electrode active material and 8 parts by mass of polyvinylidene fluoride as a binder, adding an adequate amount of N-methyl-2-pyrrolidone, and kneading the resulting mixture. This negative electrode material mixture was applied to one side of copper foil having a thickness of 10 μm as a negative electrode current collector such that the solid content of the negative electrode material mixture was adjusted to 58 $g/m^2$. Thereafter, drying treatment was performed, thereby obtaining a dry coating film. This dry coating film was pressed to be compressed such that the density of the solid content of the negative electrode material mixture reached 1.9 $g/cm^3$, thereby producing a sheet-like negative electrode. The negative electrode material mixture layer had a thickness of 40 μm. This negative electrode was cut to obtain a negative electrode plate having a width of 30 mm and a length of 45 mm, and a negative electrode collector tab was attached to the negative electrode plate as illustrated in Figure 2.

Materials other than the negative electrode used for producing a lithium-ion secondary battery were the same as those used in Comparative Example 1.

<Evaluation>

(Measurement of Gas Amount)

The volumes of the lithium-ion secondary batteries in Examples 1 to 6 and Comparative Example 1 to 2 were measured by a hydrometer (MDS-300 manufactured by Alfa Mirage Co., Ltd.)(in terms of the initial volume).

Next, constant current charging of each of the lithium-ion secondary batteries was conducted using a charge and discharge system (BATTERY TEST UNIT manufactured by IEM) at 25°C with a current value of 0.2 C and a charge

termination voltage of 3.4 V. Note that C used as a current value unit represents a "current value (A)/battery capacity (Ah)." After a break for 15 minutes, constant current charging was conducted with a current value of 0.2 C and a discharge termination voltage of 2.0 V. This operation was repeated twice. Next, constant current charging was conducted at 50°C with a current value of 1 C and a charge termination voltage of 3.5 V. After a break of 15 minutes, constant current charging was conducted with a current value of 1 C and a discharge termination voltage of 2.0 V. This operation was repeated 300 times. Thereafter, the volume of each lithium-ion secondary battery was measured by the above-mentioned hydrometer (the volume after 300 cycles).

The generated gas amount after 300 cycles was calculated by the following Formula. Table 1 lists the obtained results.

$$\text{Gas amount (mL)} = \text{(Volume after 300 cycles)} - \text{(Initial volume)}$$

[Table 1]

| | Non-crystalline Carbon Trade Name | Material Name | Graphite Trade Name | Material Name (General Name) | Graphite R value | B/A | Gas Amount |
|---|---|---|---|---|---|---|---|
| Example 1 | AB powder | acetylene black | UP5α | flake graphite | 0.2 | 1 | 1.8 |
| Example 2 | AB powder | acetylene black | JSP | spherical graphite | 0.3 | 3 | 1.4 |
| Example 3 | AB powder | acetylene black | JSP | spherical graphite | 0.3 | 1 | 1.9 |
| Example 4 | AB powder | acetylene black | JSP | spherical graphite | 0.3 | 0.3 | 2.0 |
| Example 5 | AB powder | acetylene black | SCA | spherical graphite | 0.4 | 1 | 1.9 |
| Example 6 | AB powder | acetylene black | VGCF-H | vapor grown carbon fibers | 0.5 | 10 | 1.7 |
| Comparative Example 1 | AB powder | acetylene black | - | | | | 2.5 |
| Comparative Example 2 | AB powder | acetylene black | - | | | | 4.1 |

In Table 1, the symbol "-" means that no corresponding component was contained.

It was confirmed that the generated gas amount was suppressed in Examples 1 to 6, in which a negative electrode was allowed to contain lithium titanate (LTO) as a negative electrode active material in which lithium ions are inserted and eliminated at an electric potential of 1.2 V or more with respect to an electric potential of lithium, and a positive electrode was allowed to contain an electroconductive agent including a non-crystalline carbon and graphite, as compared with Comparative Example 1, in which a positive electrode contained an electroconductive agent including a non-crystalline carbon alone.

It was further confirmed that the generated gas amount was suppressed in Examples 1 to 6 as compared with Comparative Example 2, in which a negative electrode contained a negative electrode active material including graphite.

The entire contents of the disclosures by Japanese Patent Application No. 2016-162024 filed on August 22, 2016 are incorporated herein by reference.

All the literature, patent application, and technical standards cited herein are also herein incorporated to the same extent as provided for specifically and severally with respect to an individual literature, patent application, and technical standard to the effect that the same should be so incorporated by reference.

Explanation of References

1: positive electrode plate, 2: positive electrode collector tab, 3: negative electrode plate, 4: negative electrode

collector tab, 5: separator, 6: laminate film, 10: lithium-ion secondary battery, 20: electrode assembly

## Claims

1. A lithium-ion secondary battery, comprising:

   a positive electrode that contains a positive electrode active material including a lithium nickel manganese complex oxide having a spinel structure, and contains an electroconductive agent including a non-crystalline carbon and graphite; and
   a negative electrode that contains a negative electrode active material in which lithium ions are inserted and eliminated at an electric potential of 1.2 V or more with respect to an electric potential of lithium.

2. The lithium-ion secondary battery according to claim 1, wherein the negative electrode active material comprises a lithium titanium complex oxide.

3. The lithium-ion secondary battery according to claim 1 or 2, wherein the non-crystalline carbon comprises acetylene black.

4. The lithium-ion secondary battery according to any one of claims 1 to 3, wherein an average diameter of the non-crystalline carbon is from 10 nm to 100 nm.

5. The lithium-ion secondary battery according to any one of claims 1 to 4, wherein the graphite has an R value of 1.0 or less, the R value representing a ratio (ID/IG) of an intensity of a maximum peak observed in a range of from 1200 $cm^{-1}$ to 1400 $cm^{-1}$ (ID) and an intensity of a maximum peak observed in a range of from 1500 $cm^{-1}$ to 1650 $cm^{-1}$ (IG) as measured by Raman spectrometry.

6. The lithium-ion secondary battery according to any one of claims 1 to 5, wherein a ratio (B/A) of a mass (A) of the non-crystalline carbon and a mass (B) of the graphite is from 0.1 to 10.0.

7. The lithium-ion secondary battery according to any one of claims 1 to 6, further comprising a resin as a binder, the resin having a structural unit derived from a nitrile group-including monomer and a structural unit derived from a monomer represented by the following Formula (I):

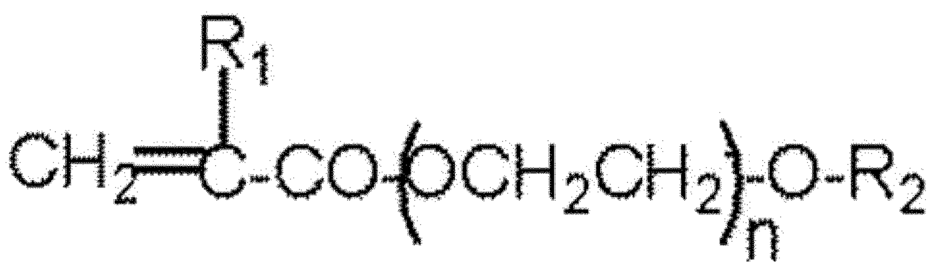

(I)

   wherein, in Formula (I), $R_1$ is H or $CH_3$, $R_2$ is H or a monovalent hydrocarbon group, and n is an integer from 1 to 50.

8. The lithium-ion secondary battery according to claim 7, wherein the resin further has a structural unit derived from a monomer represented by the following Formula (II):

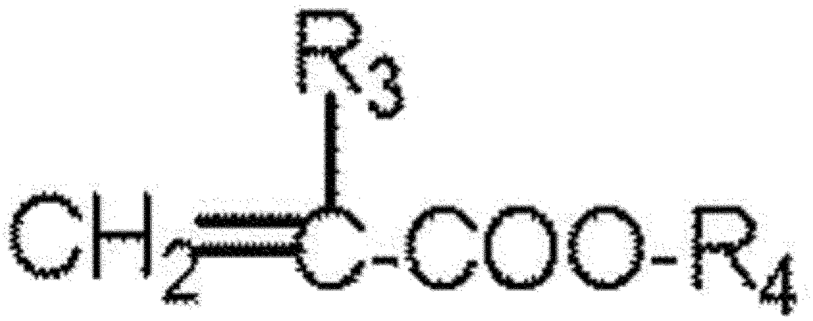

(II)

wherein, in Formula (II), $R_3$ is H or $CH_3$, and $R_4$ is H or an alkyl group having from 4 to 100 carbon atoms.

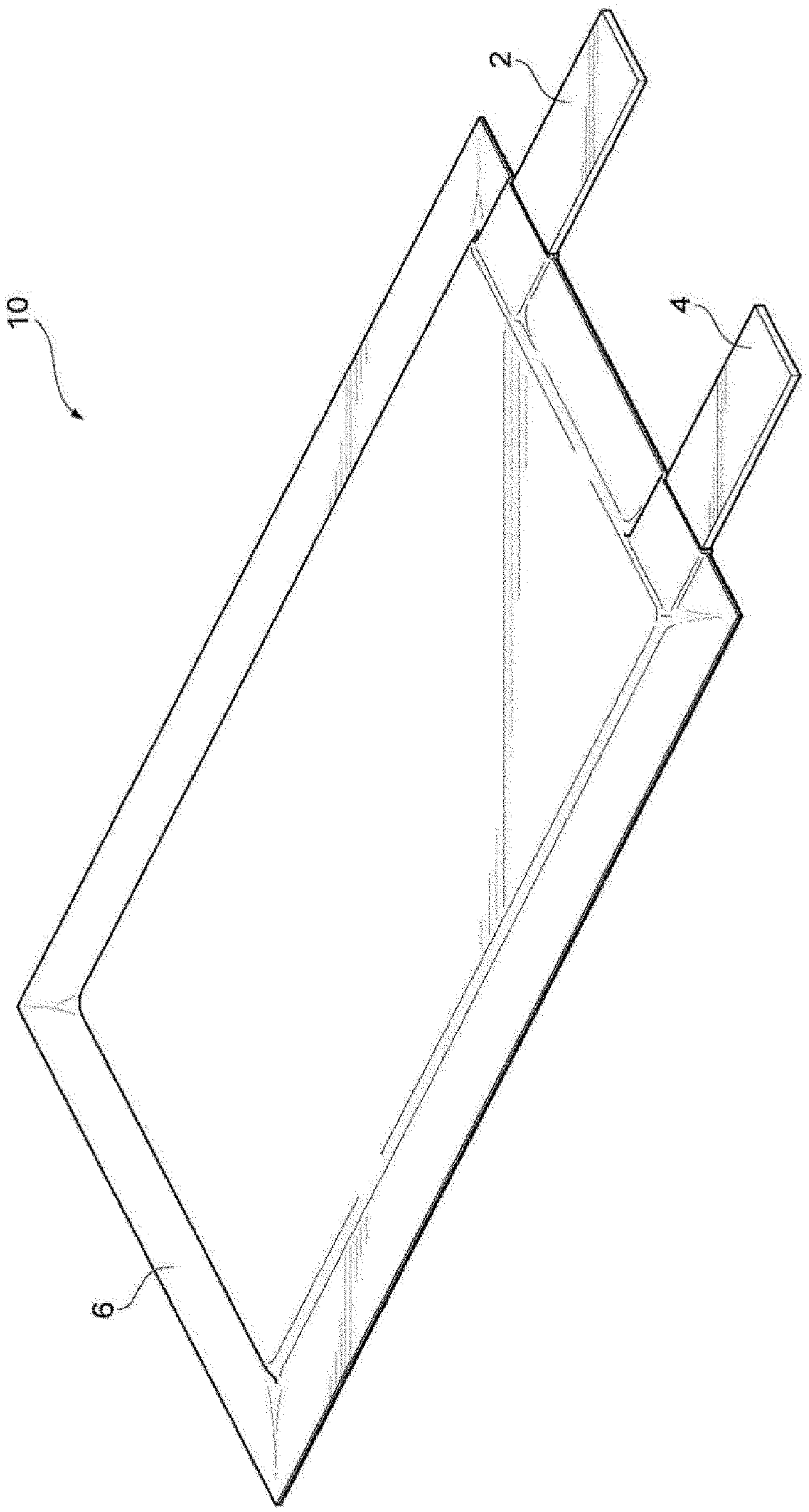


FIG. 1

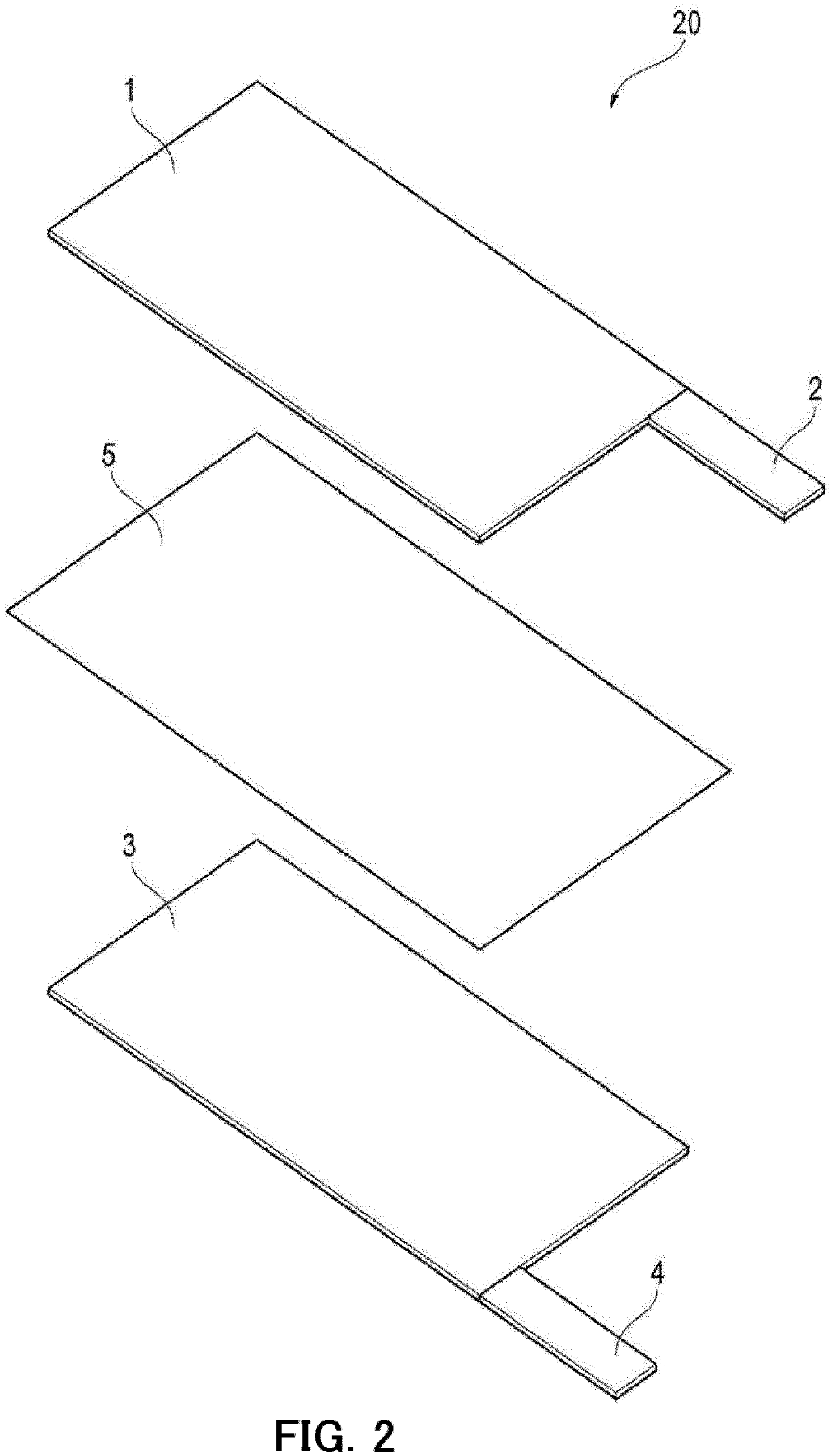


FIG. 2

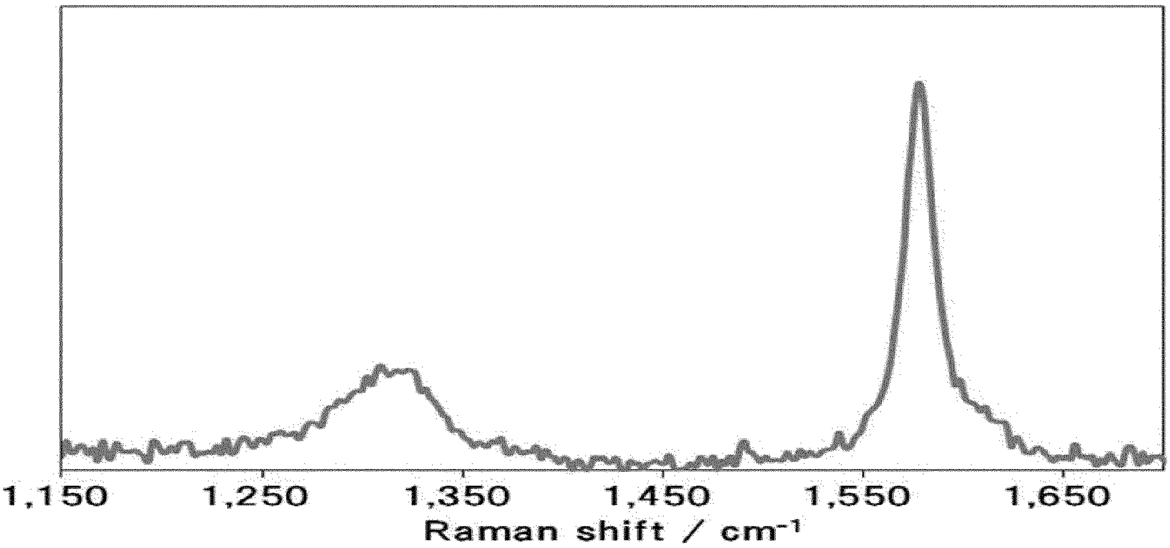
1,150
1,250
1,350
1,450
1,550
1,650
Raman shift / cm⁻¹

FIG.3

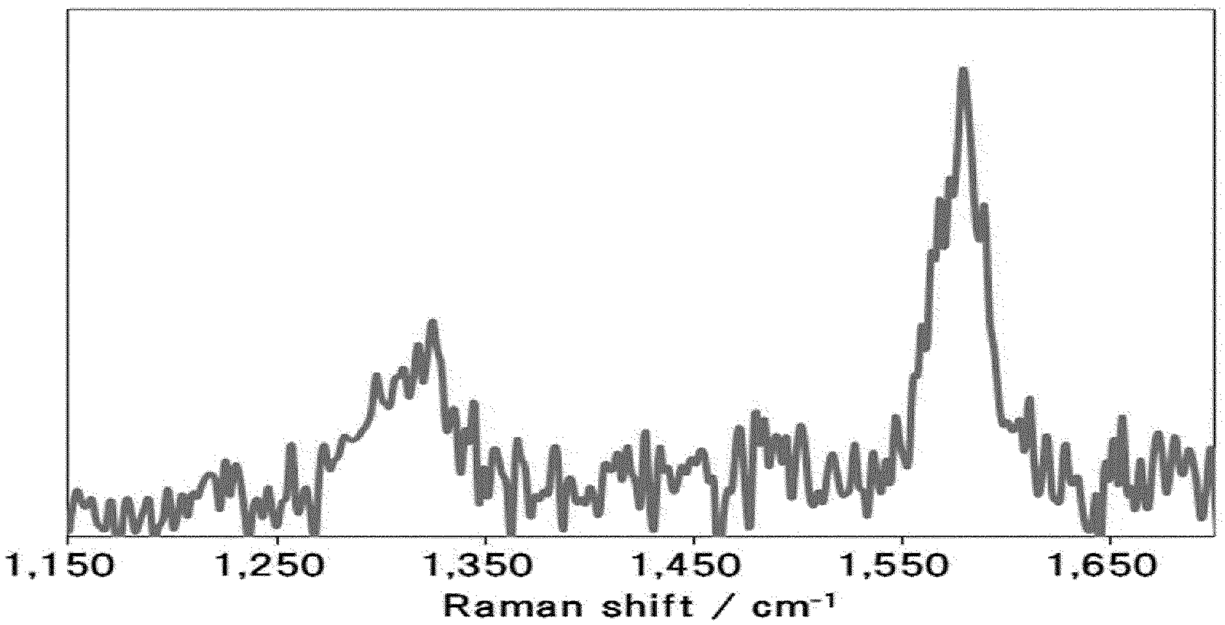
1,150
1,250
1,350
1,450
1,550
1,650
Raman shift / cm⁻¹

FIG. 4

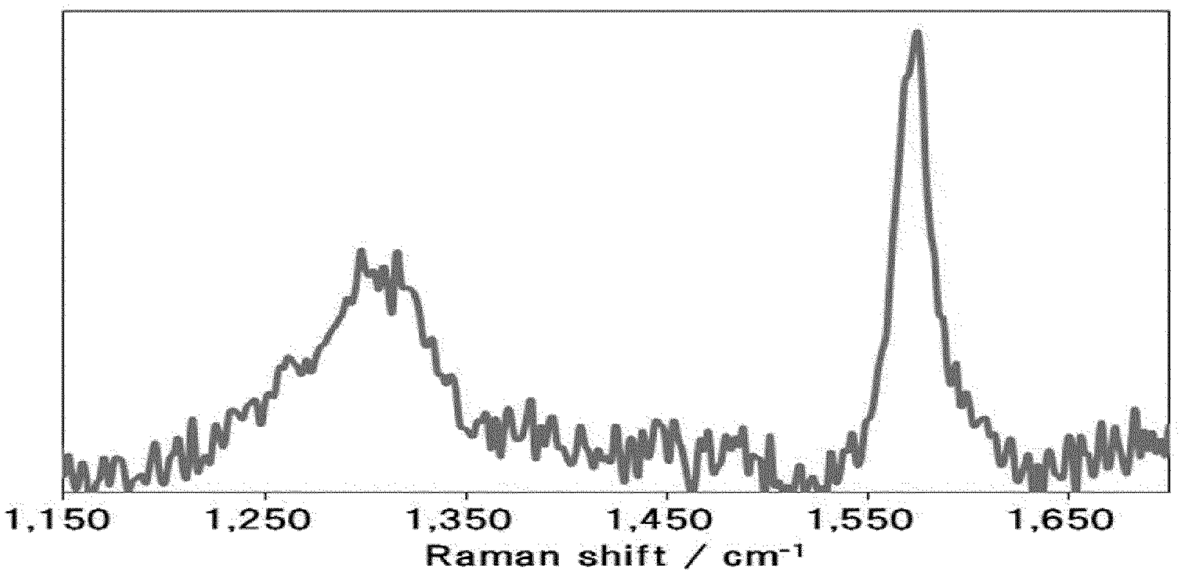
1,150
1,250
1,350
1,450
1,550
1,650
Raman shift / cm-1

FIG. 5

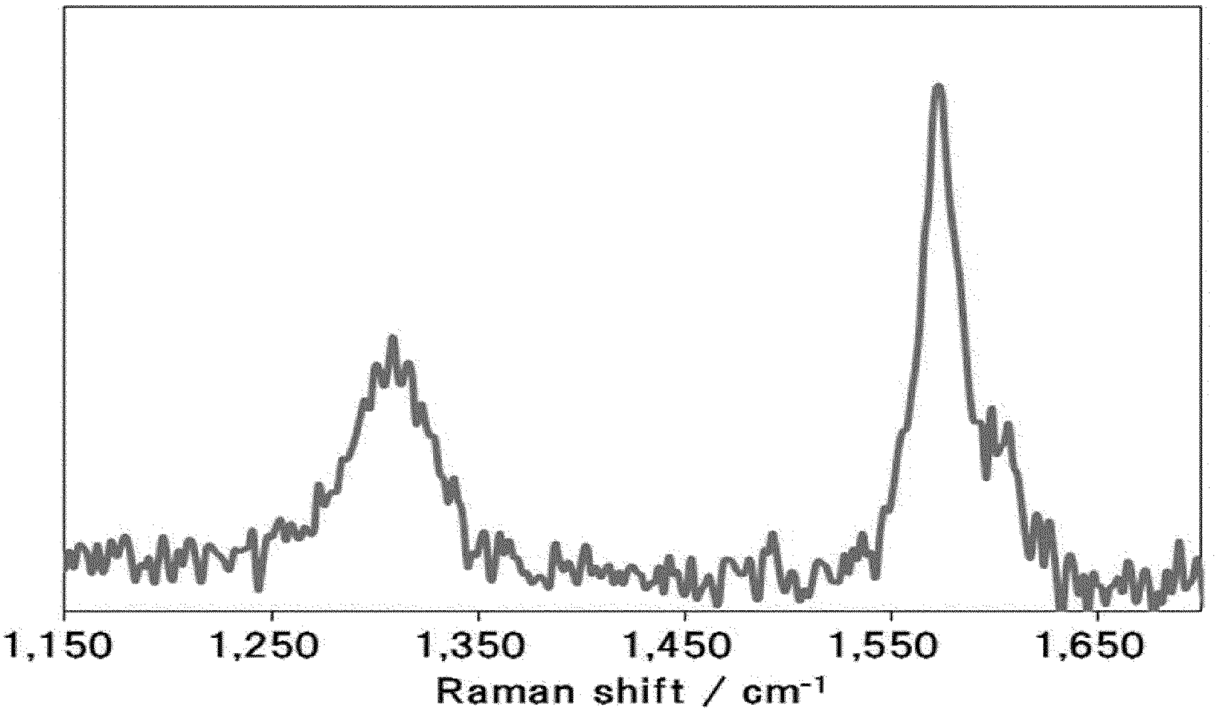
1,150
1,250
1,350
1,450
1,550
1,650
Raman shift / cm-1

FIG. 6

## INTERNATIONAL SEARCH REPORT

International application No.
PCT/JP2017/029995

**A. CLASSIFICATION OF SUBJECT MATTER**

*H01M10/0525*(2010.01)i, *H01M4/131*(2010.01)i, *H01M4/485*(2010.01)i, *H01M4/505*(2010.01)i, *H01M4/525*(2010.01)i, *H01M4/62*(2006.01)i

According to International Patent Classification (IPC) or to both national classification and IPC

**B. FIELDS SEARCHED**

Minimum documentation searched (classification system followed by classification symbols)
H01M10/0525, H01M4/131, H01M4/485, H01M4/505, H01M4/525, H01M4/62

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2017 |
| Kokai Jitsuyo Shinan Koho | 1971-2017 | Toroku Jitsuyo Shinan Koho | 1994-2017 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2011-34675 A (Sony Corp.), 17 February 2011 (17.02.2011), claims; paragraphs [0027] to [0065]; examples 1-1 to 1-20 & US 2012/0141875 A1 claims; paragraphs [0035] to [0051]; examples 1-1 to 1-20 & WO 2011/013552 A1 & EP 2461400 A1 & CN 102473920 A & KR 10-2012-0038977 A & CN 106935798 A | 1-8 |
| Y | WO 2016/031390 A1 (Murata Mfg. Co., Ltd.), 03 March 2016 (03.03.2016), paragraph [0009] & US 2017/0170528 A1 paragraph [0011] & CN 106605330 A | 1-8 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 25 October 2017 (25.10.17) | 07 November 2017 (07.11.17) |

| Name and mailing address of the ISA/ | Authorized officer |
|---|---|
| Japan Patent Office<br>3-4-3,Kasumigaseki,Chiyoda-ku,<br>Tokyo 100-8915,Japan | Telephone No. |

Form PCT/ISA/210 (second sheet) (January 2015)

**INTERNATIONAL SEARCH REPORT**

International application No.
PCT/JP2017/029995

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2015-46283 A (Shin-Kobe Electric Machinery Co., Ltd.), 12 March 2015 (12.03.2015), paragraphs [0054] to [0055] (Family: none) | 4-8 |
| Y | JP 2011-249216 A (FDK Energy Co., Ltd.), 08 December 2011 (08.12.2011), paragraphs [0020], [0031] (Family: none) | 5-8 |
| Y | JP 2015-69936 A (Tohoku Techno Arch Co., Ltd.), 13 April 2015 (13.04.2015), paragraph [0033] & US 2016/0204419 A1 paragraph [0050] & WO 2015/046124 A1 | 5-8 |
| Y | JP 2015-128069 A (Hitachi Chemical Co., Ltd.), 09 July 2015 (09.07.2015), claims; paragraphs [0012] to [0052] (Family: none) | 7-8 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2014116217 A
- JP 2016162024 A